# EUROPEAN PATENT APPLICATION

(11) **EP 4 534 488 A1**
(43) Date of publication of application: **09.04.2025**
(21) Application number: 23815574.1
(22) Date of filing: 05.04.2023
(51) Int. Cl.: C02F 1/42, B01J 39/07, B01J 41/07, B01J 47/14, B01J 49/53, B01J 49/57

(54) **WATER SOFTENER AND CONTROL METHOD FOR WATER SOFTENER**

(30) Priority: 31.05.2022 JP 2022088150
(71) Applicant: Panasonic Intellectual Property Management Co., Ltd., Kadoma-shi, Osaka 571-0057 (JP)
(72) Inventor: KATO Minato, Kadoma-shi, Osaka 571-0057 (JP); MATSUMOTO Yui, Kadoma-shi, Osaka 571-0057 (JP)
(74) Representative: Grünecker Patent- und Rechtsanwälte PartG mbB
(86) International application number: PCT/JP2023/014047
(87) International publication number: WO 2023/233812

(57) **Abstract**

Water softener (1) includes a soft water tank, a neutralization tank, bypass flow path (53) that sends, as untreated water, raw water to a downstream side of the neutralization tank without passing the raw water through the soft water tank and the neutralization tank, mixer (55) that mixes the untreated water sent from bypass flow path (53) and the neutralized soft water sent from the neutralization tank to generate mixed water, flow rate adjustment unit (56) that adjusts a supply amount of at least one of the untreated water and the neutralized soft water to mixer (55), and controller (15) that controls a mixing ratio between the untreated water and the neutralized soft water by flow rate adjustment unit (56). Controller (15) includes mixing ratio determination unit (58) that determines the mixing ratio between the untreated water and the neutralized soft water based on instruction information related to at least one of a regeneration time during which a regeneration process can be performed and a water softening degree of the mixed water, and flow rate controller (59) that adjusts the supply amount to be adjusted by flow rate adjustment unit (56) such that the mixing ratio determined by mixing ratio determination unit (58) is obtained.

## Description

### TECHNICAL FIELD

The present disclosure relates to a water softener and a method for controlling a water softener.

### BACKGROUND ART

A water softener of related art includes a weakly acidic cation exchange resin. The weakly acidic cation exchange resin has a hydrogen ion at a terminal of a functional group, and softens raw water by exchanging hardness components (for example, calcium ions and magnesium ions) in the raw water with the hydrogen ions. In the water softener of the related art, a method for regenerating a cation exchange resin by acidic electrolytic water generated by electrolysis has been known as a method for regenerating a cation exchange resin without using salt (see, for example, PTL 1).

Water softened by the weakly acidic cation exchange resin becomes acidic because the hydrogen ions are released instead of the hardness components. In order to neutralize this acidic water, the weakly acidic cation exchange resin may be used in combination with a weakly basic anion exchange resin. A method using alkaline electrolytic water generated by electrolysis has been known as the method for regenerating the weakly basic anion exchange resin (see, for example, PTL 2).

### Citation List

### Patent Literature

PTL 1: Unexamined Japanese Patent Publication No. 2011-30973
PTL 2: Unexamined Japanese Patent Publication No. 2010-142674

### SUMMARY OF THE INVENTION

In these water softeners, water cannot be softened while the ion exchange resin is regenerated. Thus, it is necessary to complete a regeneration process of the ion exchange resin in a time zone such as nighttime in which a water softening process is relatively unnecessary, and it is required to shorten a time required to complete the regeneration process.

The time required to complete the regeneration process is mainly determined by a hardness component amount adsorbed to the ion exchange resin and an electrolytic water concentration of the acidic electrolytic water or the alkaline electrolytic water generated by electrolysis. The electrolytic water concentration is one of factors that determine durability of electrodes, and mainly depends on a current value applied to the electrodes. When a high current is applied to the electrodes to increase the electrolytic water concentration, it is possible to shorten the time required to complete the regeneration process, but this is not practical because the durability of the electrolytic tank is significantly reduced. Thus, there is a problem that it is difficult to complete the regeneration process in a short time while suppressing the current value applied to the electrolytic tank.

The present disclosure solves the above problems of the related art, and provides a water softener and a method for controlling a water softener capable of shortening a time required to complete a regeneration process of an ion exchange resin.

A water softener according to the present disclosure includes a soft water tank that softens raw water containing a hardness component by a weakly acidic cation exchange resin to generate acidic soft water, a neutralization tank that neutralizes a pH of the acidic soft water having passed through the soft water tank by a weakly basic anion exchange resin to generate neutralized soft water, a bypass flow path that sends the raw water as untreated water to a downstream side of the neutralization tank without passing the raw water through the soft water tank and the neutralization tank, a mixer that mixes the untreated water sent from the bypass flow path and the neutralized soft water sent from the neutralization tank to generate mixed water, a flow rate adjustment unit that adjusts a supply amount of at least one of the untreated water and the neutralized soft water to the mixer, and a controller that controls a mixing ratio between the untreated water and the neutralized soft water which is to be adjusted by the flow rate adjustment unit. The controller includes a mixing ratio determination unit that determines the mixing ratio between the untreated water and the neutralized soft water based on instruction information regarding at least one of a regeneration time and a water softening degree of the mixed water, the regeneration time being a time during which a regeneration process of regenerating at least one of the weakly acidic cation exchange resin and the weakly basic anion exchange resin is performed, and a flow rate controller that adjusts the supply amount to be adjusted by the flow rate adjustment unit to obtain the mixing ratio determined by the mixing ratio determination unit.

Next, a method for controlling a water softener according to the present disclosure is a method for controlling a water softener including a soft water tank that softens raw water containing a hardness component by a weakly acidic cation exchange resin to generate acidic soft water, a neutralization tank that neutralizes a pH of the acidic soft water having passed through the soft water tank by a weakly basic anion exchange resin to generate neutralized soft water, a bypass flow path that sends the raw water as untreated water to a downstream side of the neutralization tank without passing the raw water through the soft water tank and the neutralization tank, a mixer that mixes the untreated water sent from the bypass flow path and the neutralized soft water sent from the neutralization tank to generate mixed water, and a flow rate adjustment unit that adjusts a supply amount of at least one of the untreated water and the neutralized soft water to the mixer. This control method includes determining a mixing ratio between the untreated water and the neutralized soft water based on instruction information regarding at least one of a regeneration time and a water softening degree of the mixed water, the regeneration time being a time during which a regeneration process of regenerating at least one of the weakly acidic cation exchange resin and the weakly basic anion exchange resin is performed, and adjusting the supply amount to be adjusted by the flow rate adjustment unit to obtain the mixing ratio.

According to the present disclosure, it is possible to provide the water softener and the method for controlling a water softener capable of adjusting the water softening degree in the water softening process and shortening the time required to complete the ion exchange resin regeneration process.

### BRIEF DESCRIPTION OF THE DRAWINGS

Fig. 1 is a conceptual diagram illustrating a configuration of a water softener according to an exemplary embodiment.
Fig. 2 is a diagram illustrating a configuration of a water softening flow path of the water softener according to the exemplary embodiment.
Fig. 3 is a diagram illustrating a configuration of a soft water tank regeneration circulation flow path and a neutralization tank regeneration circulation flow path of the water softener according to the exemplary embodiment.
Fig. 4 is a diagram illustrating a configuration of a regeneration flow path washing flow path of the water softener according to the exemplary embodiment.
Fig. 5 is a diagram illustrating a configuration of an electrolytic tank washing flow path of the water softener according to the exemplary embodiment.
Fig. 6 is a diagram illustrating a configuration of a capture unit washing flow path of the water softener according to the exemplary embodiment.
Fig. 7 is a diagram for explaining a method for controlling a water softener according to the exemplary embodiment.
Fig. 8 is a functional block diagram of the water softener according to the exemplary embodiment.
Fig. 9 is a flowchart illustrating the method for controlling a water softener according to the exemplary embodiment.

### DESCRIPTION OF EMBODIMENT

Hereinafter, exemplary embodiments of the present disclosure will be described with reference to the drawings. Note that, the following exemplary embodiments are examples embodying the present disclosure, and do not limit the technical scope of the present disclosure. In addition, the drawings explained in the exemplary embodiments are schematic representations, and the ratios of the sizes and the thicknesses of the components in each of the drawings do not necessarily reflect the actual dimensional ratio.

### (Exemplary embodiment)

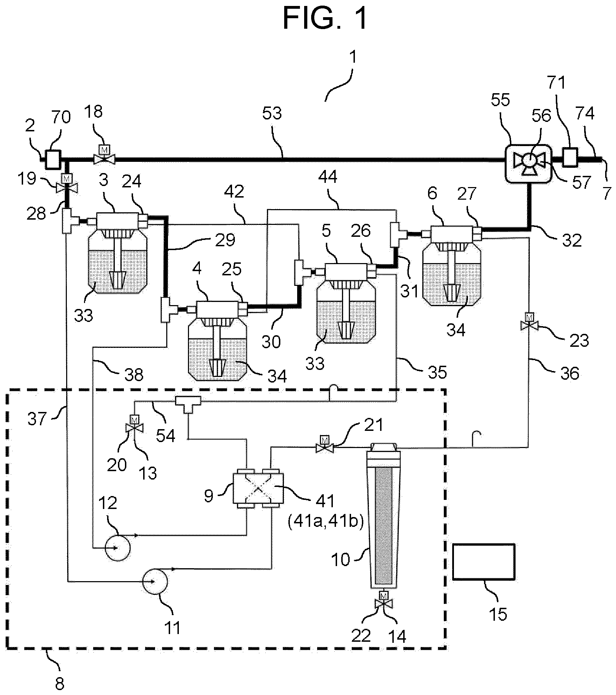

Water softener 1 and a control method therefor according to an exemplary embodiment of the present disclosure will be described with reference to Fig. 1. Fig. 1 is a conceptual diagram illustrating a configuration of water softener 1 according to the exemplary embodiment of the present disclosure. Note that, Fig. 1 conceptually illustrates each element of water softener 1.

### (1. Overall configuration)

Water softener 1 is a device that generates neutral soft water from raw water containing hardness components supplied from an outside. Note that, the raw water is water (water to be treated) introduced into the device from inlet port 2, and is, for example, city water or well water. The raw water includes the hardness components (for example, calcium ions or magnesium ions). A water softening treatment is performed by using water softener 1, and thus, neutral soft water having reduced hardness can be obtained, and soft water can be used even in an area where the hardness of the raw water is high. Water softening in water softener 1 refers to a state where the hardness component amount in water after water softening is smaller than the hardness component amount in the raw water.

Specifically, as illustrated in Fig. 1, water softener 1 includes inlet port 2, soft water tanks, neutralization tanks, water intake port 7, regeneration device 8, and controller 15.

In addition, water softener 1 includes drainage port 13, a plurality of opening and closing valves (opening and closing valves 18 to 23), and a plurality of flow path switching valves (flow path switching valves 24 to 27). Details thereof will be described later.

### (1.1 Inlet port and water intake port)

Inlet port 2 is connected to a supply source of the raw water. Inlet port 2 is an opening for introducing the raw water into water softener 1.

Water intake port 7 is an opening that supplies the water distributed in water softener 1 and subjected to the water softening treatment to the outside of the device. In water softener 1, the water after the water softening treatment can be taken out from water intake port 7 by a pressure of the raw water flowing in from inlet port 2.

In water softener 1, in a water softening process for performing the water softening treatment, the raw water supplied from the outside distributes through inlet port 2, flow path 28, first soft water tank 3, flow path 29, first neutralization tank 4, flow path 30, second soft water tank 5, flow path 31, second neutralization tank 6, flow path 32, and water intake port 7 in this order, and is discharged as the neutral soft water.

### (1.2 Soft water tank)

The soft water tanks (first soft water tank 3 and second soft water tank 5) soften the raw water containing the hardness components by an action of weakly acidic cation exchange resin 33. Specifically, in the soft water tank, cations (calcium ions and magnesium ions) which are the hardness components contained in the distributing water (raw water) are exchanged for hydrogen ions. Thus, the hardness of the raw water decreases, and the raw water is softened. Water softener 1 according to the present exemplary embodiment includes, as the soft water tanks, first soft water tank 3 and second soft water tank 5.

First soft water tank 3 softens the raw water flowing in from inlet port 2. First soft water tank 3 includes flow path switching valve 24. Details of the flow path switching valves will be collectively described later.

Second soft water tank 5 softens the water distributed through first neutralization tank 4 to be described later. Second soft water tank 5 includes flow path switching valve 26.

First soft water tank 3 and second soft water tank 5 are each filled with weakly acidic cation exchange resin 33.

Weakly acidic cation exchange resin 33 is an ion exchange resin having the hydrogen ion at a terminal of a functional group. Weakly acidic cation exchange resin 33 adsorbs the cations (calcium ions and magnesium ions), which are the hardness components contained in the raw water to be passed, and releases the hydrogen ions. The soft water treated with weakly acidic cation exchange resin 33 contains a large amount of hydrogen ions exchanged for the hardness components. That is, the soft water flowing out of first soft water tank 3 and second soft water tank 5 is soft water (acidic soft water) acidified by containing a large amount of hydrogen ions.

Since the terminal of the functional group of weakly acidic cation exchange resin 33 has the hydrogen ions, weakly acidic cation exchange resin 33 can be regenerated by using acidic electrolytic water in a regeneration treatment to be described later. At this time, the cations, which are the hardness components taken in during the water softening treatment, are released from weakly acidic cation exchange resin 33.

Weakly acidic cation exchange resin 33 is not particularly limited, and weakly acidic cation exchange resins for general purposes can be used. Examples thereof include a resin having a carboxyl group (-COOH) as an exchange group. In addition, a resin in which a hydrogen ion (H⁺) as a counter ion of the carboxyl group is a cation such as a metal ion or an ammonium ion (NH4⁺) may also be used.

### (1.3 Neutralization tank)

The neutralization tanks (first neutralization tank 4 and second neutralization tank 6) neutralize pH of the soft water (acidified soft water or acidic soft water) containing the hydrogen ions released from the soft water tanks by an action of weakly basic anion exchange resin 34 to obtain the neutral soft water. Specifically, in the neutralization tanks, the hydrogen ions contained in the soft water from the soft water tanks are adsorbed together with anions (negative ions). Thus, the pH of the soft water increases, and the neutral soft water is obtained. Water softener 1 according to the present exemplary embodiment includes, as the neutralization tanks, first neutralization tank 4 and second neutralization tank 6.

First neutralization tank 4 neutralizes the acidic soft water distributed through first soft water tank 3. First neutralization tank 4 includes flow path switching valve 25.

Second neutralization tank 6 neutralizes the acidic soft water distributed through second soft water tank 5. Second neutralization tank 6 includes flow path switching valve 27.

First neutralization tank 4 and second neutralization tank 6 are each filled with weakly basic anion exchange resin 34.

Weakly basic anion exchange resin 34 neutralizes the hydrogen ions contained in the water to be passed to generate the neutral water. Weakly basic anion exchange resin 34 can be regenerated by using alkaline electrolytic water in the regeneration treatment to be described later.

Weakly basic anion exchange resin 34 is not particularly limited, and weakly basic anion exchange resins for general purposes can be used. Examples thereof include a resin in free-base ion form.

Note that, in the neutralization treatment in water softener 1, pH of the treated water may be more than or equal to 6.5, and the water may not be completely neutralized to a pH of 7.0.

### (1.4 Regeneration device)

Regeneration device 8 is a device that regenerates weakly acidic cation exchange resin 33 filled in first soft water tank 3 and second soft water tank 5, and regenerates weakly basic anion exchange resin 34 filled in first neutralization tank 4 and second neutralization tank 6.

Regeneration device 8 includes electrolytic tank 9, capture unit 10, first water pump 11, and second water pump 12. In regeneration device 8, first supply flow path 35, second supply flow path 36, first collection flow path 37, and second collection flow path 38 are connected to second soft water tank 5, second neutralization tank 6, flow path 28, and flow path 29, respectively. Details of the flow paths will be described later.

Note that, first supply flow path 35, second supply flow path 36, first collection flow path 37, second collection flow path 38, neutralization tank bypass flow path 42, and soft water tank bypass flow path 44 form soft water tank regeneration circulation flow path 39 and neutralization tank regeneration circulation flow path 40 to be described later.

### (1.4.1 Electrolytic tank)

Electrolytic tank 9 generates acidic electrolytic water and alkaline electrolytic water by electrolyzing water having entered (water supplied from inlet port 2) by using a pair of electrodes 41 (electrode 41a and electrode 41b) provided inside, and discharges the acidic electrolytic water and the alkaline electrolytic water. More specifically, in electrode 41a serving as an anode during electrolysis in the regeneration process, hydrogen ions are generated by electrolysis, and acidic electrolytic water is generated. In addition, in electrode 41b serving as a cathode during electrolysis in the regeneration process, hydroxide ions are generated by electrolysis, and alkaline electrolytic water is generated.

Electrolytic tank 9 supplies the acidic electrolytic water to first soft water tank 3 and second soft water tank 5 via first supply flow path 35 and neutralization tank bypass flow path 42. Electrolytic tank 9 supplies the alkaline electrolytic water to first neutralization tank 4 and second neutralization tank 6 via second supply flow path 36 and soft water tank bypass flow path 44.

Although details will be described later, the acidic electrolytic water generated by electrolytic tank 9 is used for regenerating weakly acidic cation exchange resin 33 in first soft water tank 3 and second soft water tank 5. The alkaline electrolytic water generated by electrolytic tank 9 is used for regenerating weakly basic anion exchange resin 34 in first neutralization tank 4 and second neutralization tank 6. Note that, electrolytic tank 9 is configured such that an energization state to the pair of electrodes 41 can be controlled by controller 15 to be described later.

### (1.4.2 Water pump)

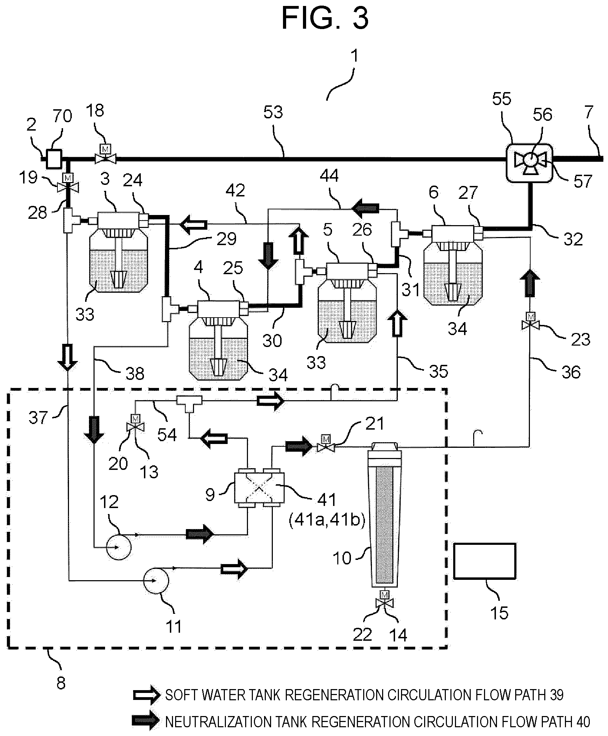

First water pump 11 is a device that distributes the acidic electrolytic water through soft water tank regeneration circulation flow path 39 (see Fig. 3) during the regeneration treatment by regeneration device 8. First water pump 11 is provided in first collection flow path 37 that communicatively connects first soft water tank 3 and electrolytic tank 9. Such an arrangement is adopted because the acidic electrolytic water can be easily circulated through soft water tank regeneration circulation flow path 39 only by first water pump 11.

Second water pump 12 is a device that distributes the alkaline electrolytic water through neutralization tank regeneration circulation flow path 40 (see Fig. 3). Second water pump 12 is provided in second collection flow path 38 that communicatively connects first neutralization tank 4 and electrolytic tank 9. Such an arrangement is adopted because the alkaline electrolytic water can be easily circulated through neutralization tank regeneration circulation flow path 40 only by second water pump 12.

In addition, first water pump 11 and second water pump 12 are connected to controller 15 to be described later to be able to communicate with each other in a wireless or wired manner.

### (1.4.3 Capture unit)

Capture unit 10 is provided in second supply flow path 36 that communicatively connects electrolytic tank 9 and second neutralization tank 6.

Capture unit 10 captures precipitates contained in the alkaline electrolytic water fed from electrolytic tank 9. The precipitates are reaction products generated when the hardness components, which are the cations released from first soft water tank 3 and second soft water tank 5 during the regeneration treatment, react with the alkaline electrolytic water in electrolytic tank 9.

More specifically, while the electrolysis of the water is performed in electrolytic tank 9, the hardness components (for example, calcium ions and magnesium ions) released from first soft water tank 3 and second soft water tank 5 during the regeneration treatment move to the cathode (electrode 41b) side. Since the alkaline electrolytic water is generated on the cathode side, the hardness components and the alkaline electrolytic water react with each other to form the precipitates. For example, in a case where the hardness components are calcium ions, a reaction in which calcium carbonate is generated or calcium hydroxide is generated occurs by mixing the calcium ions with the alkaline electrolytic water.

Such precipitates derived from the hardness components are captured as precipitates by capture unit 10 provided in second supply flow path 36. The precipitates derived from the hardness components are captured by capture unit 10, and thus, the precipitates can be prevented from flowing into second neutralization tank 6 and being deposited. Accordingly, in a case where the water softening treatment is resumed after the end of the regeneration treatment, it is possible to suppress an increase in the hardness of the soft water fed from second neutralization tank 6 due to ionization of the precipitates deposited in second neutralization tank 6 by reaction with the hydrogen ions released from first soft water tank 3 and second soft water tank 5.

In addition, in the regeneration treatment, the alkaline electrolytic water in which the precipitates derived from the hardness components has passed through capture unit 10 is distributed through second neutralization tank 6 and first neutralization tank 4, is then electrolyzed again in electrolytic tank 9, and is used again as the alkaline electrolytic water to regenerate weakly basic anion exchange resin 34. At this time, the hardness components contained in the acidic electrolytic water are reduced as compared with a case where capture unit 10 is not provided. That is, the hardness of the acidic electrolytic water decreases by capturing the precipitates by capture unit 10. Thus, the hardness components flowing into first soft water tank 3 and second soft water tank 5 can be reduced, and a decrease in regeneration efficiency of weakly acidic cation exchange resin 33 can be suppressed.

Note that, the expression "the hardness components react" includes not only a state where all the hardness components react but also a state where a component that does not react is included or a component that does not exceed a solubility product is included.

The form of capture unit 10 is not limited as long as the precipitates generated by the reaction between the hardness components and the alkaline electrolytic water can be separated. For example, a form using a cartridge type filter, a filtration layer using a granular filter material, a cyclone type solid-liquid separator, a hollow fiber membrane, or the like can be mentioned.

As means generally used as the form of capture unit 10, a cartridge type filter can be exemplified. A deep filtration type such as a yarn winding filter, a surface filtration type such as a pleated filter and a membrane filter, or a combination thereof can be used as the cartridge type filter.

The yarn winding filter corresponds to a particle diameter of 1 micrometer to 150 micrometers, and is mainly used as a pre-filter. There are pleated filters and membrane filters corresponding to a wide particle diameter of about 0.03 micrometers to 100 micrometers. However, in particular, in the implementation of the present disclosure, a filter with an accuracy of 0.5 micrometers or more is preferably used in order to reduce a possibility of blockage of the filter. In addition, a filter with an accuracy of 1.5 micrometers or less is preferable in order to ensure capture performance of the precipitates.

Since the alkaline electrolytic water flows in capture unit 10 in the regeneration treatment to be described later and the acidic electrolytic water flows in a washing treatment, a material of the cartridge type filter is preferably a material (for example, polypropylene) having high corrosion resistance to acid and alkali.

The granular filter material used for the filtration layer is intended to capture and remove the hardness components, but it is also possible to remove particles having a surface potential to be adsorbed to the granular filter material, particles having a particle diameter of about 1 micrometer to 10 micrometers or chromaticity depending on a presence state of ions and the like in the raw water. A filter material suitable for an object to be removed, such as filtration sand, a pellet fiber filter material, or the like, can be used as the granular filter medium. The material of the granular filter material may be, for example, a material having hardness that is likely to settle in water and is less likely to be deformed by a pressure, such as sand, anthracite, garnet, ceramics, granular activated carbon, iron oxyhydroxide, or manganese sand. The particle diameter may be, for example, 0.3 millimeters to 5.0 millimeters, having an equivalent coefficient of 1.2 to 2.0.

A multilayer filtration method in which a plurality of types of filter materials having different specific gravities are mixed and used is a method in which particles having different sizes are layered in order from smallest particles to largest particles from the bottom as a layer for filtration. In the multilayer filtration method, particles having a large specific gravity and a small size and particles having a small specific gravity and a large size are usually mixed to form a multilayer structure. The multilayer filtration method is preferable because there are advantages such as high filtration efficiency per unit volume and low head loss as compared with a case where a single kind of filter material is used.

As the granular filter material, for example, garnet having 0.3 millimeters, sand having 0.6 millimeters, and anthracite having 1.0 millimeter can be mixed and used in 2 : 1 : 1. However, a mixing ratio or the particle size is preferably adjusted in accordance with particle properties of turbidity.

In addition, capture unit 10 includes opening and closing valve 22 and capture unit drainage port 14.

Opening and closing valve 22 is a valve provided below capture unit 10, and is a valve that controls drainage in capture unit 10. Opening and closing valve 22 is opened, and thus, water in capture unit 10 can be discharged from capture unit drainage port 14 to the outside of the device.

Capture unit drainage port 14 is an opening through which the water in capture unit 10 is discharged to the outside of the device. Opening and closing valve 22 provided upstream of capture unit drainage port 14 is opened, and thus, the water in capture unit 10 can be discharged from capture unit drainage port 14 to the outside of the device.

### (1.5 Mixer)

Mixer 55 includes flow rate adjustment unit 56. Mixer 55 mixes untreated water as the raw water with soft water having passed through the soft water tank and the neutralization tank to obtain mixed water. The mixed water is used, and thus, a water softening degree of the water obtained from water intake port 7 can be adjusted. That is, in a case where the same raw water amount is softened, an adsorption amount of hardness components to the soft water tank can be reduced as compared with a case where the untreated water and the soft water are not mixed. Accordingly, a time required for regenerating the soft water tank can be shortened.

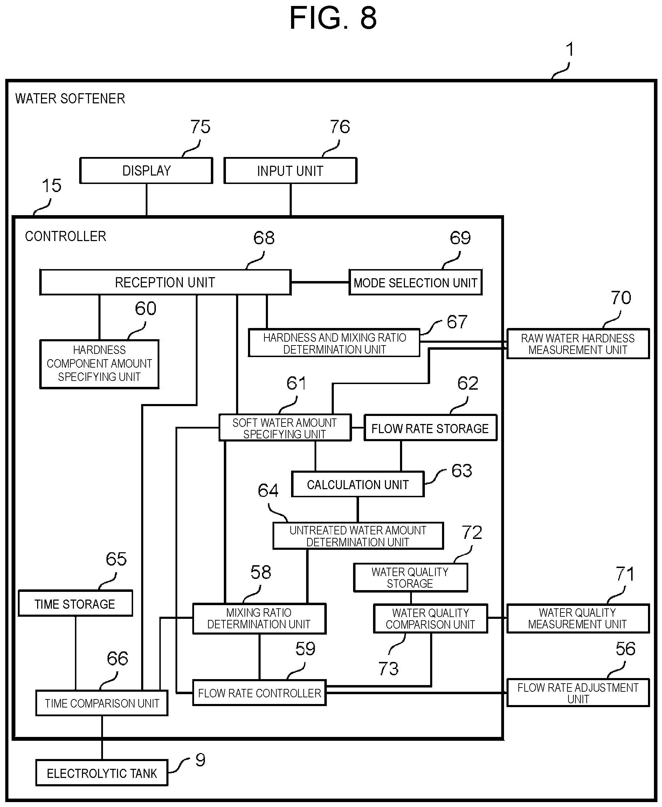

Flow rate adjustment unit 56 includes valve 57. Flow rate adjustment unit 56 adjusts an opening degree of valve 57 based on a mixing ratio between the untreated water and the soft water transmitted from flow rate controller 59 (see Fig. 8). As a result, flow rate adjustment unit 56 adjusts a supply amount of at least one of the untreated water and the neutralized soft water to mixer 55.

Valve 57 is a valve that can be set to a predetermined opening degree, and the opening degree can be set to any value by flow rate adjustment unit 56. For example, in a case where the opening degree of valve 57 is "80%", in a breakdown of the water distributed through mixer 55, the untreated water flowing in from bypass flow path 53 is 80%, and the soft water flowing in from flow path 32 is 20%.

### (1.6 Opening and closing valve and flow path switching valve)

A plurality of opening and closing valves (opening and closing valves 18 to 23) are provided in the respective flow paths, and switch between an "opened" state and a "closed" state in the respective flow paths.

Opening and closing valve 18, opening and closing valve 19, opening and closing valve 21, and opening and closing valve 23 among the plurality of opening and closing valves 18 to 23 start or stop the distribution of the water to the flow paths by opening and closing the valves.

Opening and closing valve 20 and opening and closing valve 22 are opened in a regeneration flow path washing process, an electrolytic tank washing process, and a capture unit washing process to be described later, and discharge regenerated circulation water to the outside of the device.

The plurality of flow path switching valves (flow path switching valves 24 to 27) are provided in first soft water tank 3, second soft water tank 5, first neutralization tank 4, and second neutralization tank 6, respectively. Each of the plurality of flow path switching valves has three openings. A first opening is an inlet and outlet port through which water can flow in and out, a second opening is an inlet port that does not function as an outlet port but functions as an inlet port, and a third opening is an outlet port that does not function as an inlet port but functions as an outlet port.

In each of the plurality of flow path switching valves, the inlet and outlet port is constantly "opened", and when one of the inlet port and the outlet port is "opened" depending on a water flowing direction, the other is "closed". Flow path switching valves 24 to 27 are provided, and thus, the number of opening and closing valves required for each flow path in water softener 1 can be reduced. As a result, cost of water softener 1 can be reduced.

In addition, the plurality of opening and closing valves (opening and closing valves 18 to 23) and the plurality of flow path switching valves (flow path switching valves 24 to 27) are connected to be able to communicate with controller 15 to be described later in a wireless or wired manner.

### (1.7 Drainage port)

Drainage port 13 is an opening provided at an end of drainage flow path 54, and is an opening for discharging the water in the device to the outside of the device in the regeneration path washing process and the electrolytic tank washing process. Opening and closing valve 20 is provided upstream of drainage port 13, and drainage from drainage port 13 can be performed by opening opening and closing valve 20.

### (1.8 Flow path)

Bypass flow path 53 is a flow path that communicatively connects inlet port 2 and flow path 74. Opening and closing valve 18, mixer 55 for mixing the untreated raw water (untreated water) and the soft water, and flow rate adjustment unit 56 are provided on bypass flow path 53. By bypass flow path 53, it is possible to send the raw water as the untreated water to a downstream side of the neutralization tank without passing the raw water through the soft water tank and the neutralization tank. In addition, even in a case where any one of the regeneration process, the regeneration flow path washing process, the electrolytic tank washing process, and the capture unit washing process is performed by bypass flow path 53, a user of water softener 1 can obtain the raw water from water intake port 7.

### (1.8.1 Water softening flow path)

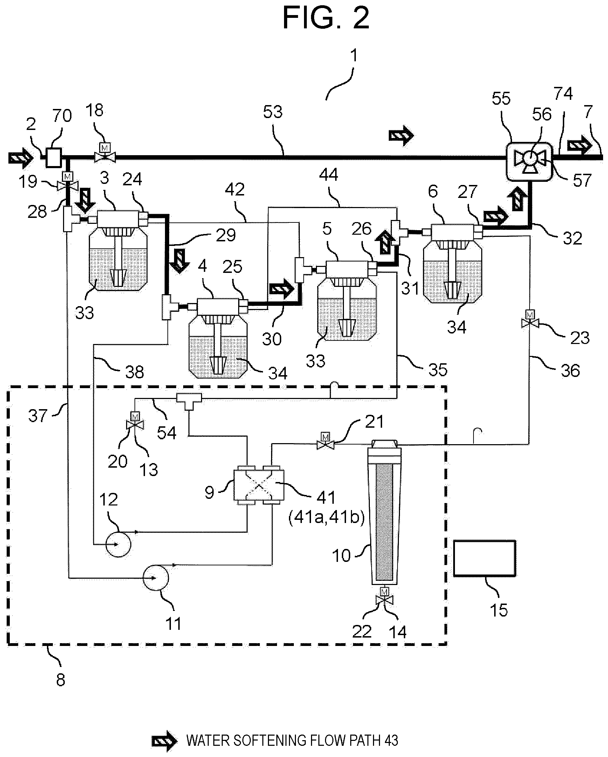

Water softening flow path 43 formed in the water softening process of water softener 1 will be described with reference to Fig. 2. Fig. 2 is a diagram illustrating a configuration of water softening flow path 43 of water softener 1.

Water softening flow path 43 (hatched arrow in Fig. 2) is a flow path for softening the raw water. The raw water distributed through water softening flow path 43 becomes the neutral soft water, and is discharged from water intake port 7 to the outside of the device.

Water softening flow path 43 is a flow path for passing the water through a route for passing the water through the soft water tank and the neutralization tank and a route for passing the raw water, respectively, mixing the raw water and the neutralized soft water in mixer 55, and supplying the soft water from water intake port 7. Here, the route for passing the water through the soft water tank and the neutralization tank is a route for passing the water through inlet port 2, flow path 28, first soft water tank 3, flow path 29, first neutralization tank 4, flow path 30, second soft water tank 5, flow path 31, second neutralization tank 6, flow path 32, and mixer 55.

Flow path 28 is a flow path that connects inlet port 2 to first soft water tank 3. That is, flow path 28 is a flow path that guides the raw water containing the hardness components from inlet port 2 to first soft water tank 3.

Flow path 29 is a flow path that connects first soft water tank 3 to first neutralization tank 4. That is, flow path 29 is a flow path that guides the water softened in first soft water tank 3 to first neutralization tank 4.

Flow path 30 is a flow path that connects first neutralization tank 4 to second soft water tank 5. That is, flow path 30 is a flow path that guides the water neutralized in first neutralization tank 4 to second soft water tank 5.

Flow path 31 is a flow path that connects second soft water tank 5 to second neutralization tank 6. That is, flow path 31 is a flow path that guides the water softened in second soft water tank 5 to second neutralization tank 6.

Flow path 32 is a flow path that connects second neutralization tank 6 to mixer 55. That is, flow path 32 is a flow path that guides the water neutralized in second neutralization tank 6 to mixer 55.

Flow path 74 is a flow path that connects mixer 55 to water intake port 7. That is, flow path 74 is a flow path that guides the soft water in which the raw water and the soft water are mixed and the water softening degree is adjusted to water intake port 7.

Bypass flow path 53 is a flow path that connects inlet port 2 to mixer 55. That is, bypass flow path 53 is a flow path that guides the raw water from inlet port 2 to mixer 55.

As illustrated in Fig. 2, opening and closing valve 19 is installed on flow path 28 on a downstream side of inlet port 2 and on an upstream side of first soft water tank 3. **In** addition, opening and closing valve 18 is installed in bypass flow path 53. First soft water tank 3 and inlet port 2 are communicably connected by closing opening and closing valve 18 and opening opening and closing valve 19.

In addition, flow path switching valve 24 is switched such that first soft water tank 3 and first neutralization tank 4 are communicatively connected to each other, flow path switching valve 25 is switched such that first neutralization tank 4 and second soft water tank 5, flow path switching valve 26 is switched such that second soft water tank 5 and second neutralization tank 6 are communicatively connected to each other, and flow path switching valve 27 is switched such that second neutralization tank 6 and mixer 55 are communicatively connected to each other. Valve 57 of flow rate adjustment unit 56 installed in mixer 55 is completely opened such that the neutralized soft water can be communicatively connected.

As a result, water softening flow path 43 that communicatively connects inlet port 2 to water intake port 7 via flow path 28, first soft water tank 3, flow path 29, first neutralization tank 4, flow path 30, second soft water tank 5, flow path 31, second neutralization tank 6, and flow path 32 is formed. In addition, in a case where it is necessary to mix the raw water by setting based on instruction information to be described later, it is also possible to open opening and closing valve 18 installed in bypass flow path 53, adjust the opening degree of valve 57 in mixer 55, mix the raw water and the neutralized soft water, and allow the raw water and the neutralized soft water to be communicated to water intake port 7. Note that, at this time, opening and closing valve 20, opening and closing valve 21, and opening and closing valve 23 are closed.

### (1.8.2 Regeneration circulation flow path)

Next, soft water tank regeneration circulation flow path 39 and neutralization tank regeneration circulation flow path 40 formed in the regeneration process of water softener 1 will be described with reference to Fig. 3. Fig. 3 is a diagram illustrating a configuration of soft water tank regeneration circulation flow path 39 and neutralization tank regeneration circulation flow path 40 of water softener 1.

First, soft water tank regeneration circulation flow path 39 will be described.

Soft water tank regeneration circulation flow path 39 is a flow path for regenerating first soft water tank 3 and second soft water tank 5 by distributing the acidic electrolytic water in the regeneration process. As indicated by a white arrow in Fig. 3, soft water tank regeneration circulation flow path 39 is a flow path through which the water fed by first water pump 11 is distributed through electrolytic tank 9, second soft water tank 5, and first soft water tank 3, and returns to electrolytic tank 9 to circulate.

Specifically, soft water tank regeneration circulation flow path 39 is formed by respective flow paths of first supply flow path 35 connecting electrolytic tank 9 and second soft water tank 5, neutralization tank bypass flow path 42 connecting second soft water tank 5 and first soft water tank 3, and first collection flow path 37 connecting first soft water tank 3 and first water pump 11.

First supply flow path 35 is a flow path communicably connecting a downstream side of electrolytic tank 9 to a downstream side of second soft water tank 5, and is a flow path for supplying the acidic electrolytic water from electrolytic tank 9 to second soft water tank 5.

Neutralization tank bypass flow path 42 is a flow path that bypasses first neutralization tank 4 and communicatively connects an upstream side of second soft water tank 5 to a downstream side of first soft water tank 3, and is a flow path for supplying the acidic electrolytic water from second soft water tank 5 to first soft water tank 3.

First collection flow path 37 is a flow path that communicably connects the upstream side of first soft water tank 3 to an upstream side of electrolytic tank 9, and is a flow path that collects the acidic electrolytic water containing the hardness components having passed through first soft water tank 3 and second soft water tank 5 into electrolytic tank 9. First water pump 11 is provided in first collection flow path 37.

Soft water tank regeneration circulation flow path 39 is a flow path that introduces the acidic electrolytic water fed from electrolytic tank 9 into first soft water tank 3 and second soft water tank 5 from the downstream side of each of first soft water tank 3 and second soft water tank 5, and causes the acidic electrolytic water to flow out from the upstream side where the adsorption amount of hardness components is larger than on the downstream side of each soft water tank. Note that, the downstream side refers to a downstream side in the flow path during the water softening treatment.

Next, neutralization tank regeneration circulation flow path 40 will be described.

Neutralization tank regeneration circulation flow path 40 is a flow path for regenerating first neutralization tank 4 and second neutralization tank 6 by distributing the alkaline electrolytic water in the regeneration process. As indicated by a black arrow in Fig. 3, neutralization tank regeneration circulation flow path 40 is a flow path through which the water fed by second water pump 12 is distributed through electrolytic tank 9, second neutralization tank 6, and first neutralization tank 4, and returns to electrolytic tank 9 to circulate.

Specifically, neutralization tank regeneration circulation flow path 40 includes second supply flow path 36 connecting electrolytic tank 9 and second neutralization tank 6, soft water tank bypass flow path 44 connecting second neutralization tank 6 and first neutralization tank 4, and second collection flow path 38 connecting first neutralization tank 4 and second water pump 12.

Second supply flow path 36 is a flow path communicably connecting the downstream side of electrolytic tank 9 to a downstream side of second neutralization tank 6, and is a flow path for supplying the alkaline electrolytic water from electrolytic tank 9 to second neutralization tank 6. Capture unit 10, opening and closing valve 21, and opening and closing valve 23 are installed in second supply flow path 36.

Soft water tank bypass flow path 44 is a flow path that bypasses second soft water tank 5 and communicatively connects an upstream side of second neutralization tank 6 to a downstream side of first neutralization tank 4, and is a flow path for supplying the alkaline electrolytic water from second neutralization tank 6 to first neutralization tank 4.

Second collection flow path 38 is a flow path that communicatively connects an upstream side of first neutralization tank 4 to the upstream side of electrolytic tank 9, and is a flow path that collects the alkaline electrolytic water having passed through first neutralization tank 4 and second neutralization tank 6 into electrolytic tank 9. Second water pump 12 is provided in second collection flow path 38.

### (1.8.3 Regeneration flow path washing flow path)

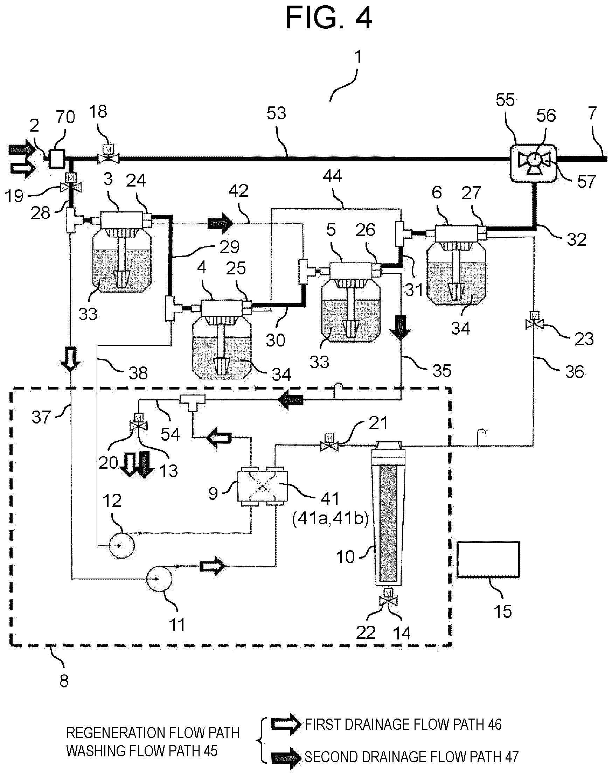

Next, regeneration flow path washing flow path 45 formed in the regeneration flow path washing process of water softener 1 will be described with reference to Fig. 4. Fig. 4 is a diagram illustrating a configuration of regeneration flow path washing flow path 45 of water softener 1.

Regeneration flow path washing flow path 45 is a flow path for discharging high hardness water remaining in the flow path to the outside of the device without flowing into first neutralization tank 4 and second neutralization tank 6 in the regeneration flow path washing process to be described later. Regeneration flow path washing flow path 45 includes first drainage flow path 46 and second drainage flow path 47.

As indicated by a white arrow in Fig. 4, first drainage flow path 46 is constituted by flow paths connecting inlet port 2, first water pump 11, electrolytic tank 9, opening and closing valve 20, and drainage port 13. Specifically, first drainage flow path 46 is a flow path that distributes the raw water flowing in from inlet port 2 through flow path 28, first collection flow path 37, first water pump 11, electrolytic tank 9, drainage flow path 54, opening and closing valve 20, and drainage port 13 in this order.

Drainage flow path 54 is a flow path connected to first supply flow path 35 at one end, and is a flow path connected to drainage port 13 at the other end. Opening and closing valve 20 is provided in drainage flow path 54, and the water in the flow path can be drained to the outside of the device by opening opening and closing valve 20, and drainage from drainage port 13 can be stopped by closing opening and closing valve 20.

As indicated by a black arrow in Fig. 4, second drainage flow path 47 is constituted by flow paths communicatively connecting inlet port 2 to drainage port 13 via first soft water tank 3, second soft water tank 5, and opening and closing valve 20. Specifically, second drainage flow path 47 is a flow path that distributes the raw water flowing in from inlet port 2 through flow path 28, first soft water tank 3, neutralization tank bypass flow path 42, second soft water tank 5, first supply flow path 35, opening and closing valve 20, and drainage port 13 in this order.

Note that, a flow rate of the water distributed through second drainage flow path 47 is preferably controlled to be larger than a flow rate of water distributed through the first drainage flow path. As a result, it is possible to preferentially replace the high hardness water in second drainage flow path 47 which is a flow path including the soft water tank used in the water softening process with the raw water. Accordingly, it is possible to suppress the influence of the high hardness water when the water softening process is started.

### (1.8.4 Electrolytic tank washing flow path)

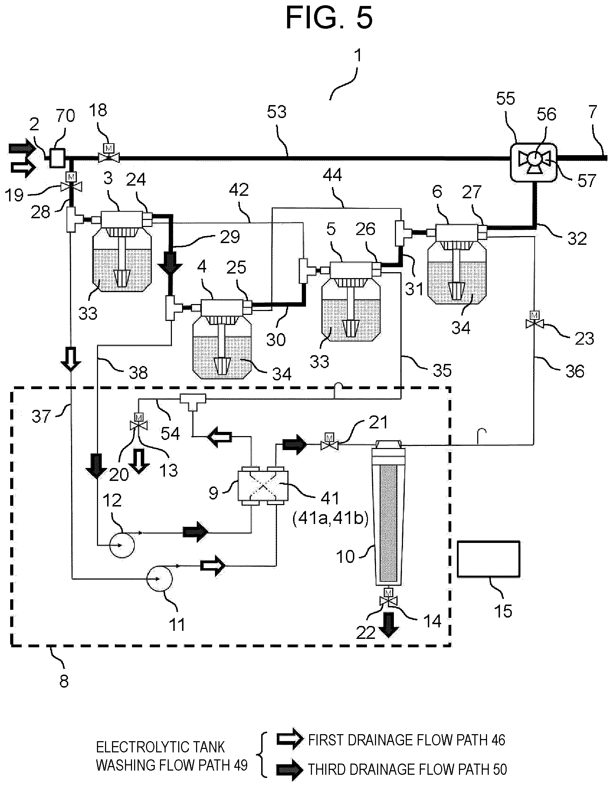

Next, electrolytic tank washing flow path 49 formed in the electrolytic tank washing process of water softener 1 will be described with reference to Fig. 5. Fig. 5 is a diagram illustrating a configuration of electrolytic tank washing flow path 49 of water softener 1.

Electrolytic tank washing flow path 49 is a flow path for removing the precipitates caused by the hardness components in electrolytic tank 9 and neutralization tank regeneration circulation flow path 40 in the electrolytic tank washing process to be described later. Electrolytic tank washing flow path 49 includes first drainage flow path 46 and third drainage flow path 50 described above.

As indicated by a black arrow in Fig. 5, third drainage flow path 50 is constituted by flow paths communicatively connecting inlet port 2 to capture unit drainage port 14 via first soft water tank 3, second water pump 12, electrolytic tank 9, opening and closing valve 21, capture unit 10, and opening and closing valve 22. Specifically, third drainage flow path 50 is a flow path that distributes the raw water flowing in from inlet port 2 through flow path 28, first soft water tank 3, second collection flow path 38, second water pump 12, electrolytic tank 9, second supply flow path 36, opening and closing valve 21, capture unit 10, and opening and closing valve 22 in this order, and discharges the raw water from capture unit drainage port 14 to the outside of the device.

More specifically, in third drainage flow path 50, the raw water flowing in from inlet port 2 flows into first soft water tank 3 via flow path 28 to obtain the acidic soft water. The generated acidic soft water flows into electrolytic tank 9 via second water pump 12 by second collection flow path 38. Thereafter, the acidic soft water is distributed through opening and closing valve 21, capture unit 10, and opening and closing valve 22 in this order via second supply flow path 36 to dissolve the precipitates of capture unit 10, and is discharged to the outside of the device from capture unit drainage port 14.

### (1.8.5 Capture unit washing flow path)

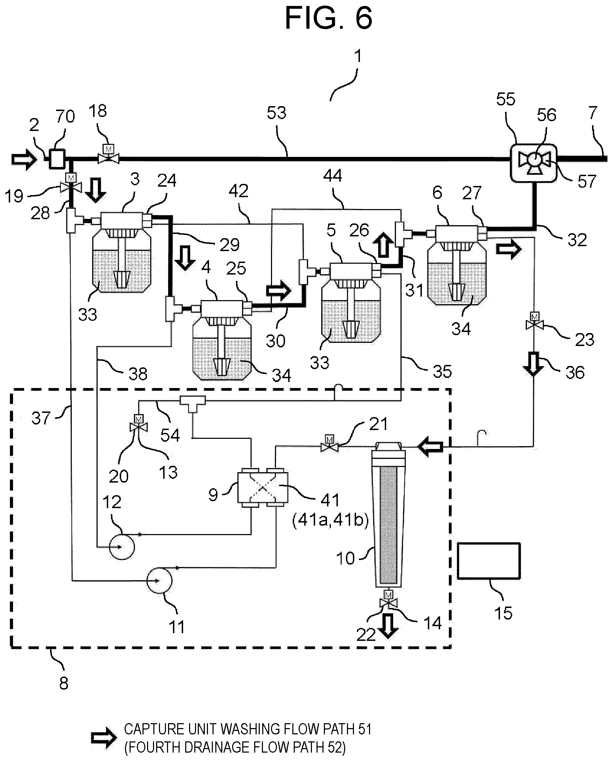

Next, capture unit washing flow path 51 formed in the capture unit washing process of water softener 1 will be described with reference to Fig. 6. Fig. 6 is a diagram illustrating a configuration of capture unit washing flow path 51 of water softener 1.

Capture unit washing flow path 51 is a flow path for removing the precipitates derived from the hardness components precipitated in capture unit 10 in a capture unit washing process to be described later. Capture unit washing flow path 51 includes fourth drainage flow path 52.

As illustrated in Fig. 6, capture unit washing flow path 51 is constituted by flow paths communicatively connecting inlet port 2 to capture unit drainage port 14 via first soft water tank 3, first neutralization tank 4, second soft water tank 5, second neutralization tank 6, and capture unit 10. Specifically, capture unit washing flow path 51 is a flow path that distributes the raw water flowing in from inlet port 2 through flow path 28, first soft water tank 3, flow path 29, first neutralization tank 4, flow path 30, second soft water tank 5, flow path 31, second neutralization tank 6, second supply flow path 36, opening and closing valve 23, capture unit 10, and opening and closing valve 22 in this order, and discharges the raw water from capture unit drainage port 14 to the outside of the device.

### (1.9 Raw water hardness measurement unit)

Raw water hardness measurement unit 70 measures the hardness of the raw water flowing into water softener 1. Here, a general-purpose raw water hardness measurement unit can be used as raw water hardness measurement unit 70. Examples of raw water hardness measurement unit 70 include a detector that measures electrical conductivity of a liquid or a detector that measures the amount of total dissolved solid (TDS) contained in water.

### (1.10 Input unit)

Input unit 76 (see Fig. 8) is provided, for example, on a top surface of water softener 1, and enables input of commands from the user, such as setting of the water softening degree, setting regarding a regeneration time, start of the water softening process, and start of the regeneration process. The command input to input unit 76 is transmitted to controller 15. Note that, input unit 76 may not be provided in water softener 1, and may be configured to input the command from an application program or the like in a mobile terminal held by the user.

### (1.11 Display)

Display 75 (see Fig. 8) is provided, for example, on the top surface of water softener 1, and displays information such as an operation status of water softener 1, states of various operation modes, and a water softening degree or hardness of the mixed water. Display 75 may not be provided on the top surface of water softener 1. For example, the mobile terminal may include a display, and the mobile terminal and controller 15 may be configured to perform wireless communication. Thus, the mobile terminal displays information transmitted by the wireless communication on the display.

### (1.12 Controller)

Each function of controller 15 according to the present exemplary embodiment will be described with reference to Fig. 8. Fig. 8 is a functional block diagram of water softener 1 according to the exemplary embodiment.

Controller 15 controls execution of each process of the water softening process, the regeneration process, the regeneration flow path washing process, the electrolytic tank washing process, and the capture unit washing process, and switching between the processes.

Specifically, in the control of switching between the processes, controller 15 controls switching from the water softening process to the regeneration process, switching from the regeneration process to the regeneration flow path washing process, switching from the regeneration flow path washing process to the electrolytic tank washing process, switching from the electrolytic tank washing process to the capture unit washing process, and switching from the capture unit washing process to the water softening process. In addition, controller 15 controls opening and closing valve 20 and opening and closing valve 22 to control the drainage in the regeneration flow path washing process, the electrolytic tank washing process, and the capture unit washing process.

In addition, controller 15 controls flow path switching valves 24 to 27, opening and closing valve 18, opening and closing valve 19, opening and closing valve 21, and opening and closing valve 23, and executes switching between the flow paths.

In addition, controller 15 enables selection of a regeneration time setting mode and a water softening degree setting mode to be described later according to instruction information of the user.

Controller 15 receives an input of a time required for completion of regeneration of the resin based on assumed raw water hardness, a passed water amount to the soft water tank, and the electrolysis performance of electrolytic tank 9.

Controller 15 includes reception unit 68, mode selection unit 69, hardness component amount specifying unit 60, hardness and mixing ratio determination unit 67, soft water amount specifying unit 61, flow rate storage 62, calculation unit 63, untreated water amount determination unit 64, mixing ratio determination unit 58, and flow rate controller 59. In addition, although details will be described later, time storage 65, time comparison unit 66, water quality storage 72, and water quality comparison unit 73 may be provided.

Reception unit 68 receives an input related to the regeneration time or the water softening degree from the user and generates instruction information. The input from the user may be, for example, a form in which a desired regeneration time or a desired water softening degree is input as a numerical value, or a form in which a desired mode is selected from among modes set by dividing the regeneration time or the degree of water softening in stages. Examples of the instruction information include a regeneration time of a resin and a water softening degree of water obtained from water intake port 7. In a case where the generated instruction information is the regeneration time, the instruction information is transmitted to mode selection unit 69, hardness component amount specifying unit 60, and soft water amount specifying unit 61. In a case where the generated instruction information is the water softening degree, the instruction information is transmitted to mode selection unit 69 and hardness and mixing ratio determination unit 67.

Mode selection unit 69 selects one operation mode from among a plurality of operation modes based on the instruction information generated by reception unit 68, and performs control in the determined operation mode. Specifically, for example, in a case where the instruction information is the regeneration time, controller 15 performs control in the regeneration time setting mode, and in a case where the instruction information is the water softening degree, controller 15 performs control in the water softening degree setting mode. Note that, the water softening degree in the instruction information is the water softening degree of the neutralized soft water after having passed through mixer 55.

Note that, stepwise operation modes may be further set in the operation mode. For example, "regeneration time setting mode A" may be selected in a case where the instruction information is information of "regeneration time of 6 hours", and "regeneration time setting mode B" may be selected in a case where the instruction information is information of "regeneration time of 8 hours". Similarly, for the water softening degree setting mode, for example, "water softening degree setting mode A" may be selected in a case where the instruction information is information of "water softening degree of 50", and "water softening degree setting mode B" may be selected in a case where the instruction information is information of "water softening degree of 150". As a result, it is possible to perform operation control corresponding to finer inputs.

Hardness component amount specifying unit 60 specifies the hardness component amount (adsorption hardness amount) that can be adsorbed to the soft water tank to complete the resin regeneration within the regeneration time based on instruction information regarding the input regeneration time.

A method for specifying the adsorption hardness amount will be described. First, in order to regenerate the resin, it is necessary to supply protons to the soft water tank, and in order to complete the resin regeneration, it is necessary to supply the resin with a proton amount equivalent to the hardness component amount adsorbed to weakly acidic cation exchange resin 33 in the soft water tank. A proton generation amount (mol) in electrolytic tank 9 is derived from a current value (A = C/sec), a Faraday constant (C/mol), proton generation efficiency (%), and a regeneration time (h). Specifically, the proton generation amount is derived by "proton generation amount (mol) = current value (A = C/sec) × proton generation efficiency (%) × regeneration time (h) × 3600 ÷ Faraday constant (C/mol)".

Note that, since the current value and the proton generation efficiency are set by predetermined electrolysis performance information, the current value and the proton generation efficiency are fixed values. Accordingly, when the regeneration time is determined based on the instruction information regarding the regeneration time, the proton generation amount supplied from electrolytic tank 9 can be derived. In addition, from a relationship of 2R - COOH + Ca²⁺ ↔ (R - COO)₂Ca + 2H⁺, in a case where 1 mol of hardness component ions is adsorbed to weakly acidic cation exchange resin 33, the proton amount required for regeneration is 2 mol. That is, the hardness component amount that can be adsorbed to the soft water tank to complete the resin regeneration within a predetermined regeneration time can be derived from the proton generation amount. Information regarding the specified hardness component amount is transmitted to soft water amount specifying unit 61.

Hardness and mixing ratio determination unit 67 determines the mixing ratio between the untreated water which is the raw water in mixer 55 and the soft water after passing through the soft water tank from the information of the water softening degree set by the instruction information of the user and the acquired information of the raw water hardness.

Soft water amount specifying unit 61 performs calculation corresponding to the operation mode and specifies a raw water amount that can be treated by the soft water tank.

Specifically, in the case of the operation in the regeneration time setting mode, soft water amount specifying unit 61 specifies the raw water amount that can be softened by the soft water tank to complete the resin regeneration within the regeneration time based on the instruction information regarding the regeneration time, the hardness component amount specified by hardness component amount specifying unit 60, and the information on the raw water hardness.

More specifically, the hardness component amount that can be adsorbed to the soft water tank is calculated from the regeneration time, the current value that is a set value of electrolytic tank 9, and the proton generation efficiency. In addition, the hardness component amount adsorbed to the resin can be derived by multiplying a value calculated by subtracting the hardness of the neutralized soft water from the raw water hardness by the raw water amount that can be treated by the soft water tank. Assuming that the hardness of the neutralized soft water is 0 ppm, the raw water amount that can be treated by the soft water tank can be specified from the hardness component amount and the raw water hardness.

Note that, as the hardness of the neutralized soft water, a value input in advance may be used, or an actual measurement value measured by a hardness meter or the like may be used. Information regarding the raw water amount specified from the raw water hardness is transmitted to calculation unit 63 and mixing ratio determination unit 58.

In the case of the operation in the water softening degree setting mode, soft water amount specifying unit 61 specifies the raw water amount that can be softened by the soft water tank to have a predetermined water softening degree based on a mixing ratio specified by hardness and mixing ratio determination unit 67 and the information on the raw water hardness. Specifically, assuming that the hardness of the soft water after passing through the soft water tank is 0 ppm, the mixing ratio is determined. As an example of the mixing ratio setting, in a case where the water softening degree of the instruction information is 40 ppm and the raw water hardness is 100 ppm, untreated water : neutralized soft water = 2 : 3 is determined as the mixing ratio. When the flow rate of the mixed water of the raw water sent from mixer 55 and the neutralized soft water is designated, the raw water amount that can be treated by the soft water tank is specified based on the mixing ratio determined by hardness and mixing ratio determination unit 67.

For example, in the case of the mixing ratio between untreated water : neutralized soft water = 2 : 3, when the flow rate of the mixed water is 600 L, the raw water amount that can be treated by the soft water tank is 360 L. In addition, the flow rate of the mixed water may be an actual measurement value stored in flow rate storage 62 or a designated value input in advance. The information regarding the specified raw water amount is transmitted to calculation unit 63.

Note that, the information on the raw water hardness may be an actual measurement value measured by a hardness meter or the like, or for example, a plurality of raw water hardnesses may be input in advance, and the raw water hardness corresponding to information such as a use area may be selected and used.

Flow rate storage 62 stores a stored mixed water amount. The stored mixed water amount is a water amount per unit time of the mixed water sent from mixer 55, and is a water flow rate sent from water softener 1 to the outside. The unit of the stored mixed water amount is represented by, for example, L/min. Information regarding the stored mixed water amount is transmitted to calculation unit 63.

Note that, although it is assumed that an actual measurement value measured by a flow meter or the like is used as the stored mixed water amount, an assumed value based on use history information of the user, a rated value input in advance, or the like may be used. In addition, the unit time can be voluntarily set, but here, for example, one day. That is, the actual measurement value measured by the flow meter or the like may be used, or a total passed water amount per unit time sent from water softener 1 to the outside of the device may be designated based on information such as a usage status of the user and a family structure.

Calculation unit 63 calculates a difference between the stored mixed water amount and the raw water amount specified by soft water amount specifying unit 61. Specifically, calculation unit 63 calculates the difference by subtracting the raw water amount that can be softened by the soft water tank from the stored mixed water amount. Information regarding the calculated difference is transmitted to untreated water amount determination unit 64.

Untreated water amount determination unit 64 determines the supply amount of untreated water from the difference calculated by calculation unit 63. Note that, in a case where the unit time is one day, the supply amount of untreated water determined here is a water amount per day. Information regarding the determined supply amount of untreated water is transmitted to mixing ratio determination unit 58.

In the case of the regeneration time setting mode, mixing ratio determination unit 58 determines the mixing ratio between the untreated water and the soft water based on information of the raw water amount specified by soft water amount specifying unit 61 and the supply amount of untreated water determined by untreated water amount determination unit 64. Note that, the water softening degree of the mixed water can be calculated from the determined mixing ratio. Information regarding the determined mixing ratio is transmitted to flow rate controller 59.

Flow rate controller 59 controls the flow rates of the untreated water and the soft water by flow rate adjustment unit 56 to obtain the mixing ratio determined by mixing ratio determination unit 58 or hardness and mixing ratio determination unit 67. Note that, the flow rate refers to a passed water amount per unit time, and flow rate controller 59 adjusts a flow rate ratio to the determined mixing ratio.

Time storage 65 stores an elapsed time from the start of the regeneration process.

Time comparison unit 66 compares the elapsed time stored in time storage 65 with the regeneration time based on the instruction information generated by reception unit 68.

Each functional block of controller 15 can be realized by an element such as a central processing unit (CPU) of a computer or a mechanical device in terms of hardware, and is realized by a computer program or the like in terms of software, but here, functional blocks are realized by cooperation thereof. Accordingly, these functional blocks can be realized in various forms by a combination of hardware and software.

The above configuration is the configuration of water softener 1.

### (2. Operation)

Next, the operation of water softener 1 will be described.

### (2.1 Water softening process, regeneration process, regeneration flow path washing process, electrolytic tank washing process, and capture unit washing process)

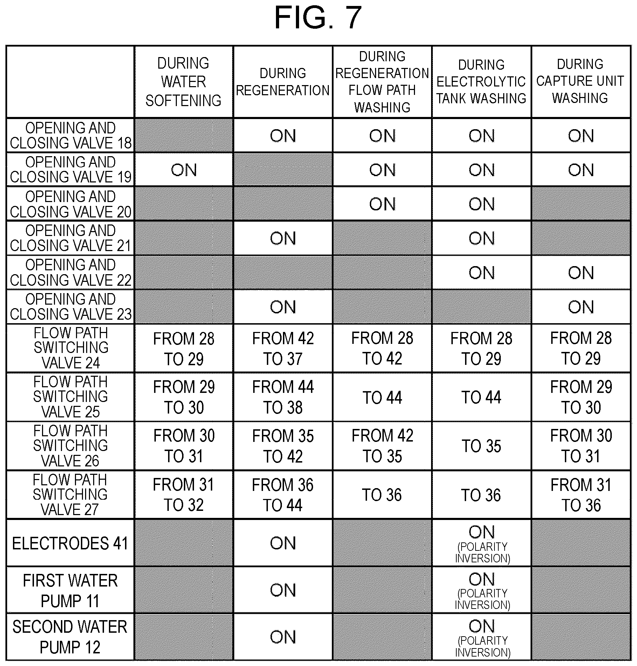

Next, the water softening process, the regeneration process, the regeneration flow path washing process, the electrolytic tank washing process, and the capture unit washing process of water softener 1 will be described with reference to Fig. 7. Fig. 7 is a diagram illustrating a state of water softener 1 during an operation, and is a diagram for explaining a control method.

In the water softening process, the regeneration process, the regeneration flow path washing process, the electrolytic tank washing process, and the capture unit washing process, as illustrated in Fig. 7, controller 15 performs control such that opening and closing valves 18 to 23, flow path switching valves 24 to 27, electrodes 41 of electrolytic tank 9, first water pump 11, and second water pump 12 are switched to be in respective distribution states.

Here, "ON" in Fig. 7 indicates a state where the corresponding opening and closing valve is "opened", a state where electrodes 41 are energized, and a state where the corresponding water pump is operating. A blank indicates a state where the corresponding opening and closing valve is "closed", a state where electrodes 41 are not energized, and a state where the corresponding water pump is stopped.

In addition, "from (number of component A) to (number of component B)" in Fig. 7 indicates a state where the corresponding flow path switching valve connects the flow paths in a direction in which water is sent from corresponding component A to corresponding component B. For example, flow path switching valve 24 in the water softening process connects the flow paths such that the water can be sent from flow path 28 to flow path 29.

In addition, "to (number of component C)" in Fig. 7 indicates a state where the corresponding flow path switching valve connects the flow paths in a direction in which there is a possibility of sending water to the corresponding component C. At this time, although the flow path is connected, since the water is in an environment in which inflow and outflow of the water to and from the soft water tank or the neutralization tank in which the corresponding flow path switching valve is provided is unlikely to occur, the sending of the water from the corresponding flow path switching valve is extremely unlikely to occur.

### (2.2 Water softening process)

First, an operation of water softener 1 in the water softening process will be described with reference to Fig. 2 and a field of "DURING WATER SOFTENING" in Fig. 7.

In water softener 1, as illustrated in Fig. 7, in the water softening process, opening and closing valve 19 provided in flow path 28 is opened in a state where opening and closing valve 18 is closed. As a result, the raw water containing the hardness components flows in from the outside. Since the flowed raw water is distributed through first soft water tank 3, first neutralization tank 4, second soft water tank 5, and second neutralization tank 6 in this order, the softened water (neutral soft water) can be taken out from water intake port 7 in water softener 1.

At this time, flow path switching valve 24 is in a connection state where water can be sent from flow path 28 to flow path 29, flow path switching valve 25 is in a connection state where water can be sent from flow path 29 to flow path 30, flow path switching valve 26 is in a connection state where water can be sent from flow path 30 to flow path 31, and flow path switching valve 27 is in a connection state where water can be sent from flow path 31 to flow path 32. Opening and closing valves 20 to 23 are all closed.

In addition, the operations of electrodes 41, first water pump 11, and second water pump 12 of electrolytic tank 9 are also stopped. In addition, in a case where it is necessary to adjust the water softening degree by setting the operation mode, the raw water and the neutralized soft water can be mixed by opening opening and closing valve 18 and adjusting the opening degree of valve 57 of mixer 55.

Specifically, as illustrated in Fig. 2, in the water softening process, the raw water is supplied from inlet port 2 to first soft water tank 3 through flow path 28 by the pressure of the raw water flowing in from the outside. Then, the raw water supplied to first soft water tank 3 is distributed through weakly acidic cation exchange resin 33 provided in first soft water tank 3. At this time, the cations as the hardness components in the raw water are adsorbed by the action of weakly acidic cation exchange resin 33, and the hydrogen ions are released (ion exchange is performed). Then, the cations are removed from the raw water, and thus, the raw water is softened.

Since the water softened in first soft water tank 3 contains a large amount of hydrogen ions that have been exchanged for the hardness components and have flowed out, the softened water is acidified to be the acidic water (first soft water) having a low pH. Here, when water containing a large amount of permanent hardness components (for example, sulfates such as calcium sulfate or chlorides such as magnesium chloride) as the hardness components is softened, a pH of the water is more likely to decrease than the water containing a large amount of temporary hardness components (carbonates such as, for example, calcium carbonate). Since water softening is less likely to proceed in a state where the pH is decreased, the water distributed through first soft water tank 3 is passed through first neutralization tank 4 to perform neutralization.

The water softened in first soft water tank 3 is distributed through flow path 29 via flow path switching valve 24 provided in first soft water tank 3 and flows into first neutralization tank 4. In first neutralization tank 4, the hydrogen ions contained in the softened water are adsorbed by an action of weakly basic anion exchange resin 34. That is, since the hydrogen ions are removed from the water softened by first soft water tank 3, the decreased pH is increased and neutralized. Thus, as compared with a case where the water softened in first soft water tank 3 is directly softened in second soft water tank 5, the water softening treatment in second soft water tank 5 easily proceeds.

The water (neutralized first soft water) neutralized by first neutralization tank 4 is distributed through flow path 30 via flow path switching valve 25 provided in first neutralization tank 4, and flows into second soft water tank 5. In second soft water tank 5, the cations as the hardness components are adsorbed and the hydrogen ions are released by the action of weakly acidic cation exchange resin 33. In second soft water tank 5, hardness components that cannot be removed in first soft water tank 3 are exchanged for the hydrogen ions contained in weakly acidic cation exchange resin 33. That is, the water flowed into second soft water tank 5 is further softened to become the soft water (second soft water).

The second soft water is distributed through flow path 31 via flow path switching valve 26 provided in second soft water tank 5, and flows into second neutralization tank 6. In second neutralization tank 6, the hydrogen ions contained in the flowed second soft water are adsorbed by the action of weakly basic anion exchange resin 34. That is, since the hydrogen ions are removed from the second soft water, the decreased pH increases, and the second soft water becomes the neutral soft water (neutralized second soft water) that can be used as domestic water. The neutralized second soft water is distributed through flow path 32 and mixer 55 via flow path switching valve 27 provided in second neutralization tank 6, and can be taken out from water intake port 7.

That is, in the water softening treatment, the raw water is distributed through first soft water tank 3, first neutralization tank 4, second soft water tank 5, and second neutralization tank 6 in this order. As a result, the raw water containing the hardness components flows out of first soft water tank 3 before the pH of the raw water is decreased by the water softening treatment in first soft water tank 3, is neutralized in first neutralization tank 4, is softened in second soft water tank 5, and is neutralized in second neutralization tank 6. Thus, as compared with a case where each of the soft water tank and the neutralization tank is constituted by a single body, since it is possible to suppress the decrease in pH of the water distributed in the soft water tank, that is, acidification, exchange between the hardness components and the hydrogen ions retained in weakly acidic cation exchange resin 33 in the soft water tank (particularly, second soft water tank 5) easily occurs. Accordingly, water softening performance can be improved.

In water softener 1, the untreated water as the raw water distributed through bypass flow path 53 and the neutralized soft water can be mixed in mixer 55, and the opening degree of valve 57 of mixer 55 is adjusted in controller 15 in accordance with the operation mode set based on the instruction information of the user. As a result, since the raw water and the neutralized soft water can be mixed at a predetermined mixing ratio, it is possible to obtain the mixed water in which the water softening degree is adjusted. In addition, the water softening degree is adjusted, and thus, the regeneration time can be simultaneously adjusted.

In water softener 1, controller 15 ends the water softening process and executes the regeneration process in a case where a specified time zone is reached or in a case where a total passed water amount in the water softening process (the water amount of mixed water sent from mixer 55) exceeds input information (stored mixed water amount).

### (2.3 Regeneration process)

Next, an operation of water softener 1 in the regeneration process by regeneration device 8 will be sequentially described with reference to Fig. 3 and a field of "DURING REGENERATION" in Fig. 7. The regeneration process is a process of regenerating at least one of weakly acidic cation exchange resin 33 and weakly basic anion exchange resin 34.

In water softener 1, cation exchange capacities of first soft water tank 3 and second soft water tank 5 filled with weakly acidic cation exchange resin 33 decreases or disappears as the use is continued. That is, ion exchange cannot be performed after all the hydrogen ions, which are functional groups of the cation exchange resin, are exchanged for calcium ions or magnesium ions, which are the hardness components. Even before all the hydrogen ions are exchanged for the hardness components, since the ion exchange reaction is less likely to occur as the hydrogen ions decrease, the water softening performance is deteriorated.

In such a state, the hardness components are contained in treated water. Thus, in water softener 1, it is necessary to perform the regeneration treatment of first soft water tank 3, second soft water tank 5, first neutralization tank 4, and second neutralization tank 6 by regeneration device 8.

In the regeneration process, controller 15 closes opening and closing valve 19, opening and closing valve 20, and opening and closing valve 22, and opens opening and closing valve 18, opening and closing valve 21, and opening and closing valve 23. In addition, controller 15 brings flow path switching valve 24 into a connection state where water can be sent from neutralization tank bypass flow path 42 to first collection flow path 37, brings flow path switching valve 25 into a connection state where water can be sent from soft water tank bypass flow path 44 to second collection flow path 38, brings flow path switching valve 26 into a connection state where water can be sent from first supply flow path 35 to neutralization tank bypass flow path 42, and brings flow path switching valve 27 into a connection state where water can be sent from second supply flow path 36 to soft water tank bypass flow path 44.

That is, a state where first soft water tank 3 and second soft water tank 5 are communicably connected to each other, a state where first neutralization tank 4 and second neutralization tank 6 are communicably connected to each other, and a state where the drainage of drainage port 13 and capture unit drainage port 14 is stopped are obtained. As a result, as illustrated in Fig. 3, soft water tank regeneration circulation flow path 39 and neutralization tank regeneration circulation flow path 40 are formed.

Then, when first water pump 11 and second water pump 12 are operated, the acidic electrolytic water and the alkaline electrolytic water in electrolytic tank 9 circulate through soft water tank regeneration circulation flow path 39 and neutralization tank regeneration circulation flow path 40, respectively.

In addition, electrolytic tank 9 is energized such that the anode has a high potential with respect to the cathode (positive electrolysis). As a result, the hydrogen ions are generated at the anode during electrolysis, and the acidic electrolytic water is generated near the anode. On the other hand, the hydroxide ions are generated at the cathode, and the alkaline electrolytic water is generated near the cathode.

The acidic electrolytic water generated in electrolytic tank 9 is distributed through first supply flow path 35, is sent into second soft water tank 5 via flow path switching valve 26, and is distributed through weakly acidic cation exchange resin 33 inside. Then, the acidic electrolytic water distributed through second soft water tank 5 is distributed through neutralization tank bypass flow path 42, is sent into first soft water tank 3 via flow path switching valve 24, and is distributed through weakly acidic cation exchange resin 33 inside.

That is, the acidic electrolytic water is passed through weakly acidic cation exchange resin 33, and thus, the cations (hardness components) adsorbed onto weakly acidic cation exchange resin 33 undergo the ion exchange reaction with the hydrogen ions contained in the acidic electrolytic water. As a result, weakly acidic cation exchange resin 33 is regenerated.

Thereafter, the acidic electrolytic water distributed through first soft water tank 3 contains the cations and flows into first collection flow path 37. That is, the acidic electrolytic water containing the cations distributed through weakly acidic cation exchange resin 33 is collected in electrolytic tank 9 via first collection flow path 37.

As described above, soft water tank regeneration circulation flow path 39 is configured to distribute the acidic electrolytic water from the downstream side of second soft water tank 5 and flow into the downstream side of first soft water tank 3. Second soft water tank 5 is a soft water tank positioned most downstream from the inlet port of the raw water, and is a soft water tank having weakly acidic cation exchange resin 33 in which the adsorption amount of hardness components is smaller than in the soft water tank on the upstream side. First soft water tank 3 is positioned upstream, and is a soft water tank having weakly acidic cation exchange resin 33 in which more hardness components are adsorbed than in second soft water tank 5.

That is, soft water tank regeneration circulation flow path 39 is a flow path that distributes the acidic electrolytic water sent from electrolytic tank 9 through second soft water tank 5, sends the acidic electrolytic water to first soft water tank 3 by neutralization tank bypass flow path 42, distributes the acidic electrolytic water through first soft water tank 3, and causes the acidic electrolytic water to flow into electrolytic tank 9 via first collection flow path 37. As a result, in the regeneration process, the acidic electrolytic water ejected from electrolytic tank 9 flows into second soft water tank 5 having a smaller adsorption amount of hardness components than in first soft water tank 3, and the acidic electrolytic water containing the hardness components is ejected from second soft water tank 5 to first soft water tank 3. In the regeneration of weakly acidic cation exchange resin 33 in second soft water tank 5, since the consumption of the hydrogen ions in the acidic electrolytic water is smaller than in first soft water tank 3, a reduction in a hydrogen ion concentration can be suppressed as compared with the regeneration of first soft water tank 3. Thus, it is possible to suppress the acidic electrolytic water containing a large amount of hydrogen ions from flowing into first soft water tank 3 and the hardness components from being re-adsorbed in first soft water tank 3. Accordingly, it is possible to suppress a decrease in the regeneration treatment efficiency and to shorten the regeneration time.

On the other hand, the alkaline electrolytic water generated near the cathode of electrolytic tank 9 is distributed through second supply flow path 36 and capture unit 10, is sent into second neutralization tank 6 via flow path switching valve 27, and is distributed through weakly basic anion exchange resin 34 inside. The alkaline electrolytic water distributed through second neutralization tank 6 is distributed through soft water tank bypass flow path 44, is sent into first neutralization tank 4 via flow path switching valve 25, and is distributed through weakly basic anion exchange resin 34 inside.

That is, the alkaline electrolytic water is passed through weakly basic anion exchange resin 34, and thus, the anions adsorbed to weakly basic anion exchange resin 34 cause the ion exchange reaction with the hydroxide ions contained in the alkaline electrolytic water. As a result, weakly basic anion exchange resin 34 is regenerated.

The alkaline electrolytic water distributed through first neutralization tank 4 contains the anions and flows into second collection flow path 38. That is, the alkaline electrolytic water containing the anions distributed through weakly basic anion exchange resin 34 is collected in electrolytic tank 9 via second collection flow path 38.

As described above, neutralization tank regeneration circulation flow path 40 is configured to distribute the alkaline electrolytic water from the downstream side of second neutralization tank 6 and flow into the downstream side of first neutralization tank 4. Second neutralization tank 6 is a neutralization tank positioned most downstream from the inlet port of the raw water, and is a neutralization tank having weakly basic anion exchange resin 34 in which an adsorption amount of anions is smaller than in the neutralization tank on the upstream side. First neutralization tank 4 is positioned upstream, and is a neutralization tank having weakly basic anion exchange resin 34 in which more anions are adsorbed than in second neutralization tank 6.

That is, neutralization tank regeneration circulation flow path 40 is a flow path that distributes the alkaline electrolytic water sent from electrolytic tank 9 through second neutralization tank 6, sends the alkaline electrolytic water to first neutralization tank 4 by soft water tank bypass flow path 44, distributes the alkaline electrolytic water through first neutralization tank 4, and causes the alkaline electrolytic water to flow into electrolytic tank 9 via second collection flow path 38. As a result, in the regeneration process, the alkaline electrolytic water flows into second neutralization tank 6 having a smaller adsorption amount of anions than in first neutralization tank 4, and the alkaline electrolytic water containing the anions is ejected from second neutralization tank 6 to first neutralization tank 4. In the regeneration of weakly basic anion exchange resin 34 in second neutralization tank 6, since the consumption of the hydroxide ions in the alkaline electrolytic water is smaller than in first neutralization tank 4, a reduction in a hydroxide ion concentration can be suppressed as compared with the regeneration of first neutralization tank 4. Thus, it is possible to suppress the alkaline electrolytic water containing a large amount of hydroxide ions from flowing into first neutralization tank 4, and to suppress re-adsorption of anions in first neutralization tank 4. Accordingly, it is possible to suppress a decrease in the regeneration treatment efficiency and to shorten the regeneration time.

In addition, neutralization tank regeneration circulation flow path 40 introduces the alkaline electrolytic water sent from electrolytic tank 9 into first neutralization tank 4 and second neutralization tank 6 from the downstream side of first neutralization tank 4 and second neutralization tank 6, and causes the alkaline electrolytic water to flow out from the upstream side where the adsorption amount of anions is larger than on the downstream side of each neutralization tank. As a result, the alkaline electrolytic water flows in from the downstream side where an adsorption amount of anion components is smaller, and the neutralization tank is regenerated.

In the regeneration of weakly basic anion exchange resin 34 on the downstream side, since the consumption of the hydroxide ions in the alkaline electrolytic water is smaller than on the upstream side, the reduction in the hydroxide ion concentration of the alkaline electrolytic water can be suppressed. Accordingly, it is possible to suppress re-adsorption on the upstream side of anions contained in the alkaline electrolytic water from the downstream side. Accordingly, it is possible to suppress a decrease in the regeneration treatment efficiency of the neutralization tank and to shorten the regeneration time. Note that, the downstream side refers to a downstream side in the flow path during the water softening treatment.

Then, in water softener 1, in a case where the specified time zone is reached or in a case where the regeneration process has passed a certain time (for example, 4 hours) or has exceeded the regeneration time based on the instruction information, controller 15 ends the regeneration process and executes the regeneration flow path washing process.

Note that, in a case where the user desires to obtain the soft water in the regeneration process, since the raw water passes through bypass flow path 53 from inlet port 2 and flows out from water intake port 7 by opening a faucet (not illustrated) or the like connected to water softener 1, the raw water can be used without waiting for the end of the regeneration process.

### (2.4 Regeneration flow path washing process)

Next, an operation of water softener 1 in the regeneration flow path washing process will be sequentially described with reference to Fig. 4 and a field of "DURING REGENERATION FLOW PATH WASHING" in Fig. 7.

In water softener 1, in the regeneration process, the hardness components are released from first soft water tank 3 and second soft water tank 5 into the acidic electrolytic water, and the acidic electrolytic water circulates through the flow path without being discharged from soft water tank regeneration circulation flow path 39. Accordingly, the inside of soft water tank regeneration circulation flow path 39 after completion of the regeneration process is filled with high hardness water containing the hardness components released from first soft water tank 3 and second soft water tank 5.

The hardness of the high hardness water is significantly higher than the hardness (for example, 450 ppm) of the raw water, and may increase to, for example, about 2000 ppm. When the process proceeds to the water softening process in a state where the high hardness water remains in water softener 1, the high hardness water or the mixed water of the raw water and the high hardness water is discharged from water intake port 7. Accordingly, in a case where the user of water softener 1 executes the water softening process after the end of the regeneration process, there arises a problem that not only the soft water cannot be obtained immediately after the start of the water softening process but also the water having hardness higher than the raw water is obtained.

In addition, the high hardness water is distributed through weakly acidic cation exchange resin 33 in first soft water tank 3 and second soft water tank 5, and thus, the water containing the hardness components is distributed again even though the hardness components adsorbed in the regeneration process are replaced with the hydrogen ions and the regeneration is performed. Therefore, the hydrogen ions filled by the regeneration treatment that has been performed with great effort and the hardness components cause the exchange reaction, and the hardness components are adsorbed to weakly acidic cation exchange resin 33 again. Accordingly, the amount of hydrogen ions available for softening the raw water is reduced, and the water softening performance is deteriorated. In order to solve these problems, the regeneration flow path washing process for draining the high hardness water in soft water tank regeneration circulation flow path 39 is performed.

In the regeneration flow path washing process, controller 15 closes opening and closing valves 21 to 23 and opens opening and closing valves 18 to 20. In addition, controller 15 brings flow path switching valve 24 into a connection state where water can be sent from flow path 28 to neutralization tank bypass flow path 42, brings flow path switching valve 25 into a connection state where water can be sent to soft water tank bypass flow path 44, brings flow path switching valve 26 into a connection state where water can be sent from neutralization tank bypass flow path 42 to first supply flow path 35, and brings flow path switching valve 27 into a connection state where water can be sent to second supply flow path 36.

That is, a state where first soft water tank 3 and second soft water tank 5 are communicatively connected to each other, a state where second soft water tank 5 and drainage port 13 are communicatively connected to each other, a state where electrolytic tank 9 and drainage port 13 are communicatively connected to each other, and a state where drainage of capture unit drainage port 14 is stopped are obtained. As a result, as illustrated in Fig. 4, first drainage flow path 46 and second drainage flow path 47 are formed. Note that, at this time, the operations of electrodes 41, first water pump 11, and second water pump 12 are stopped.

In the regeneration flow path washing process, specifically, opening and closing valve 19 is opened, and thus, the raw water flows into first drainage flow path 46 and second drainage flow path 47 from the outside.

In first drainage flow path 46, the high hardness water in flow path 28, first collection flow path 37, first water pump 11, electrolytic tank 9, and first supply flow path 35 is swept away by the pressure of the raw water having flowed in, and flows into drainage flow path 54. The high hardness water having flowed into drainage flow path 54 is discharged from drainage port 13 to the outside of the device.

In second drainage flow path 47, the high hardness water in flow path 28, first soft water tank 3, neutralization tank bypass flow path 42, second soft water tank 5, and first supply flow path 35 is swept away by the pressure of the raw water that has flowed in, and flows into drainage flow path 54. The high hardness water having flowed into drainage flow path 54 is discharged from drainage port 13 to the outside of the device.

By doing this, by the regeneration flow path washing process, the high hardness water in first drainage flow path 46 and second drainage flow path 47, which are main remaining portions of the high hardness water after the regeneration process, can be replaced with the raw water while the distribution to the neutralization tank is suppressed. Accordingly, in the regeneration flow path washing process, since the adsorption of the hydrogen ions to weakly basic anion exchange resin 34 in the neutralization tank can be suppressed, the consumption of the filled hydroxide ions can be suppressed, and neutralization performance can be maintained. Accordingly, it is possible to suppress a decrease in water softening performance caused by the high hardness water.

Note that, controller 15 supplies the raw water to each flow path such that a flow rate of the raw water distributed through second drainage flow path 47 is larger than a flow rate of the raw water distributed through first drainage flow path 46.

As a result, it is possible to preferentially replace the high hardness water in second drainage flow path 47, which is a flow path including the soft water tank used in the water softening process and is a flow path in which drainage of the high hardness water in the flow path is essential, with the raw water. Accordingly, it is possible to suppress the decrease in water softening performance caused by the high hardness water when the water softening process is started.

In addition, since the water amount discharged from first drainage flow path 46, which is a flow path that is not used in the water softening process and is a flow path that has little influence on the water softening process even though the high hardness water remains, can be reduced, wasteful drainage can be prevented, and the water amount required for the regeneration flow path washing process can be suppressed.

In addition, as a result, the high hardness water is discharged to the outside of the device by the flow path not including the neutralization tank. That is, since the water can be drained while the hardness components in the high hardness water are suppressed from being adsorbed to weakly basic anion exchange resin 34 in the neutralization tank, it is possible to prevent the decrease in water softening performance caused by the high hardness water generated in the regeneration process and maintain the water softening performance.

In water softener 1, in a case where the specified time zone is reached, in a case where the regeneration flow path washing process exceeds a certain time (for example, 1 minute), or in a case where the passed water amount in the regeneration flow path washing process exceeds a certain value, controller 15 ends the regeneration flow path washing process and executes the electrolytic tank washing process.

Note that, in a case where the user desires to obtain the soft water in the regeneration flow path washing process, the raw water passes through bypass flow path 53 from inlet port 2 and flows out from water intake port 7 by opening a faucet (not illustrated) or the like connected to water softener 1, the raw water can be used without waiting for the end of the regeneration flow path washing process.

### (2.5 Electrolytic tank washing process)

Next, an operation of water softener 1 in the electrolytic tank washing process will be sequentially described with reference to Fig. 5 and a field of "DURING ELECTROLYTIC TANK WASHING" in Fig. 7.

In the regeneration process, when electrolytic tank 9 is operating, the hardness components (calcium ions or magnesium ions) in the water is precipitated as a solid (scale) on the cathode. Since the precipitates precipitated on the cathode is a non-conductor, an operating voltage of electrolytic tank 9 is increased, and power consumption in the regeneration process is increased. It is necessary to perform the electrolytic tank washing process for removing the precipitates precipitated on the cathode.

In the electrolytic tank washing process, controller 15 opens opening and closing valves 18 to 22 and closes opening and closing valve 23. In addition, controller 15 brings flow path switching valve 24 into a connection state where water can be sent from flow path 28 to flow path 29, brings flow path switching valve 25 into a connection state where water can be sent to soft water tank bypass flow path 44, brings flow path switching valve 26 into a connection state where water can be sent to first supply flow path 35, and brings flow path switching valve 27 into a connection state where water can be sent to second supply flow path 36.

That is, a state where first soft water tank 3 and electrolytic tank 9 are communicatively connected to each other, a state where electrolytic tank 9 and drainage port 13 are communicatively connected to each other, and a state where electrolytic tank 9 and capture unit drainage port 14 are communicatively connected to each other are obtained. As a result, as illustrated in Fig. 5, first drainage flow path 46 and third drainage flow path 50 are formed.

In the electrolytic tank washing process, specifically, opening and closing valve 19 is opened, and thus, the raw water flows into first drainage flow path 46 and third drainage flow path 50 from the outside.

In first drainage flow path 46, the flowed raw water is distributed through flow path 28, first collection flow path 37, and first water pump 11, and flows into electrolytic tank 9.

On the other hand, in third drainage flow path 50, the flowed raw water is distributed through flow path 28, first soft water tank 3, second collection flow path 38, and second water pump 12, and flows into electrolytic tank 9.

In the electrolytic tank washing process, controller 15 energizes electrolytic tank 9 such that the cathode has a high potential with respect to the anode (reverse electrolysis). Thus, electrolytic tank 9 electrolyzes the raw water flowed into the electrolytic tank to generate the alkaline electrolytic water near the anode and the acidic electrolytic water near the cathode.

At this time, the precipitates precipitated on the cathode can be dissolved by the acidic electrolytic water generated on the cathode. Accordingly, it is possible to suppress a decrease in electrolysis performance due to adhesion of the precipitates to a surface of electrodes 41.

The alkaline electrolytic water generated at the anode is distributed through first supply flow path 35, flows into drainage flow path 54, and is discharged from drainage port 13 to the outside of the device.

On the other hand, the acidic electrolytic water generated at the cathode dissolves the precipitates precipitated at the cathode, is distributed through second supply flow path 36, and flows into capture unit 10. The acidic electrolytic water flowed into capture unit 10 can dissolve the precipitates adhering to capture unit 10, and can preliminarily wash capture unit 10. Accordingly, a time required for the capture unit washing process which is a next process can be shortened. Then, the acidic electrolytic water is discharged to the outside of the device from capture unit drainage port 14 provided below capture unit 10.

That is, in the electrolytic tank washing process, the removal of the precipitates in electrolytic tank 9 and the removal of the precipitates in capture unit 10 can be simultaneously performed, and a time required from the end of the regeneration process to the start of the water softening process can be shortened.

In water softener 1, in a case where the specified time zone is reached or in a case where the electrolytic tank washing process exceeds a certain time (for example, 5 minutes), controller 15 ends the electrolytic tank washing process and executes the capture unit washing process.

Note that, in third drainage flow path 50, since the raw water passes through first soft water tank 3, the acidified water passes through capture unit 10. Thus, capture unit 10 becomes acidic, and the precipitates adhering to capture unit 10 are dissolved by the acidic water. Accordingly, since capture unit 10 can be preliminarily washed, a time required for the capture unit washing process which is a next process can be shortened. That is, the removal of the precipitates in electrolytic tank 9 and the removal of the precipitates in capture unit 10 can be simultaneously performed, and a time required from the end of the regeneration process to the start of the water softening process can be shortened.

Note that, in a case where the user desires to obtain the soft water in the electrolytic tank washing process, since the raw water passes through by bypass flow path 53 from inlet port 2 and flows out from water intake port 7 by opening a faucet (not illustrated) or the like connected to water softener 1, the raw water can be used without waiting for the end of the electrolytic tank washing process.

### (2.6 Capture unit washing process)

Next, an operation of water softener 1 in the capture unit washing process will be sequentially described with reference to Fig. 6 and a field of "DURING CAPTURE UNIT WASHING" in Fig. 7.

In the regeneration process, the high hardness water containing the hardness components released from first soft water tank 3 and second soft water tank 5 flows into electrolytic tank 9. The hardness components move to the cathode side during electrolysis, react with the hydroxide ions generated at the cathode, and become the precipitates. A part of the precipitated precipitates is contained in the alkaline electrolytic water released from electrolytic tank 9, is distributed through second supply flow path 36, and is captured by capture unit 10.

Since the precipitates are gradually deposited in capture unit 10 in the regeneration process, a pressure loss caused by capture unit 10 gradually increases, and a flow rate of the alkaline electrolytic water distributed through neutralization tank regeneration circulation flow path 40 gradually decreases. Accordingly, when the precipitates are left, a time required for regenerating weakly basic anion exchange resin 34 in first neutralization tank 4 and second neutralization tank 6 is extended, and the filling of weakly basic anion exchange resin 34 with the hydroxide ions may not be completed at the end. Thus, it is necessary to perform the capture unit washing process for removing the precipitates adhering to or precipitated on capture unit 10.

In the capture unit washing process, controller 15 opens opening and closing valve 18, the opening and closing valve 19, opening and closing valve 22, and opening and closing valve 23, and closes opening and closing valve 20 and opening and closing valve 21. In addition, controller 15 brings flow path switching valve 24 into a connection state where water can be sent from flow path 28 to flow path 29, brings flow path switching valve 25 into a connection state where water can be sent from flow path 29 to flow path 30, brings flow path switching valve 26 into a connection state where water can be sent from flow path 30 to flow path 31, and brings flow path switching valve 27 into a connection state capable where water can be sent from flow path 31 to second supply flow path 36.

That is, a state where first soft water tank 3 and first neutralization tank 4 are communicatively connected to each other, a state where first neutralization tank 4 and second soft water tank 5 are communicatively connected to each other, a state where second soft water tank 5 and second neutralization tank 6 are communicatively connected to each other, and a state where second neutralization tank 6 and capture unit drainage port 14 are communicatively connected to each other are obtained. As a result, as illustrated in Fig. 6, fourth drainage flow path 52 is formed.

In the capture unit washing process, specifically, opening and closing valve 19 is opened, and thus, the raw water flows into flow path 28 from the outside. The flowed raw water are distributed through flow path 28, first soft water tank 3, flow path 29, first neutralization tank 4, flow path 30, second soft water tank 5, flow path 31, second neutralization tank 6, and second supply flow path 36, and flows into capture unit 10.

In capture unit 10, the neutral soft water flows in from a direction opposite to the water flowing direction of the regeneration process. That is, backwashing of capture unit 10 is performed by the flowed neutral soft water. At this time, since a part of the precipitates adhering to or precipitated on capture unit 10 by the electrolytic tank washing process is dissolved in advance, capture unit 10 can be easily washed with the neutral soft water. The neutral soft water containing the precipitates is discharged to the outside of the device from capture unit drainage port 14 provided below capture unit 10.

By doing this, since capture unit 10 can be backwashed, the precipitates remaining in capture unit 10 can be removed. Accordingly, the blockage of capture unit 10 can be suppressed, and the pressure loss caused by capture unit 10 can be reduced when the regeneration process is performed again. As a result, a reduction in a flow rate of neutralization tank regeneration circulation flow path 40, which is a regeneration flow path including capture unit 10, can be suppressed, and the flow rate of the alkaline electrolytic water can be secured. As a result, regeneration performance can be secured.

Then, in water softener 1, in a case where the specified time zone is reached or in a case where the capture unit washing process exceeds a certain time (for example, 5 minutes), controller 15 ends the capture unit washing process and executes the water softening process.

Note that, a flow path from inlet port 2 to second neutralization tank 6 is the same as the flow path in the water softening process. That is, fourth drainage flow path 52 is used, and thus, second neutralization tank 6, which is a neutralization tank at a last stage in the water softening process, is filled with the softened water. Accordingly, the water softening process is performed after performing the capture unit washing process by using fourth drainage flow path 52, the user of water softener 1 can obtain, from water intake port 7, the soft water subjected to the water softening treatment and having reduced hardness immediately after the start of the water softening process.

Note that, in a case where the user desires to obtain the soft water in the capture unit washing process, since the raw water passes through by bypass flow path 53 from inlet port 2 and flows out from water intake port 7 by opening a faucet (not illustrated) or the like connected to water softener 1, the raw water can be used without waiting for the end of the capture unit washing process.

As described above, in water softener 1, the water softening process, the regeneration process, the regeneration flow path washing process, the electrolytic tank washing process, and the capture unit washing process are repeatedly executed in this order. The capture unit washing process is performed immediately before the water softening process, and thus, the neutralization tank at the last stage in the water softening process is filled with the softened water. Accordingly, when the user of water softener 1 opens the faucet, the discharge of the high hardness water from water intake port 7 can be suppressed, and the soft water having stable hardness can be provided immediately after the start of the water softening process.

In addition, the electrolytic tank washing process is performed after performing the regeneration flow path washing process, and thus, the high hardness water has already been discharged to the outside of the device during polarity inversion in the electrolytic tank washing process, and a possibility of electrolyzing the high hardness water can be suppressed. Accordingly, it is possible to suppress electrolysis of water having high hardness, and it is possible to suppress generation of a large amount of scale in a flow path through which the alkaline electrolytic water is sent during polarity inversion.

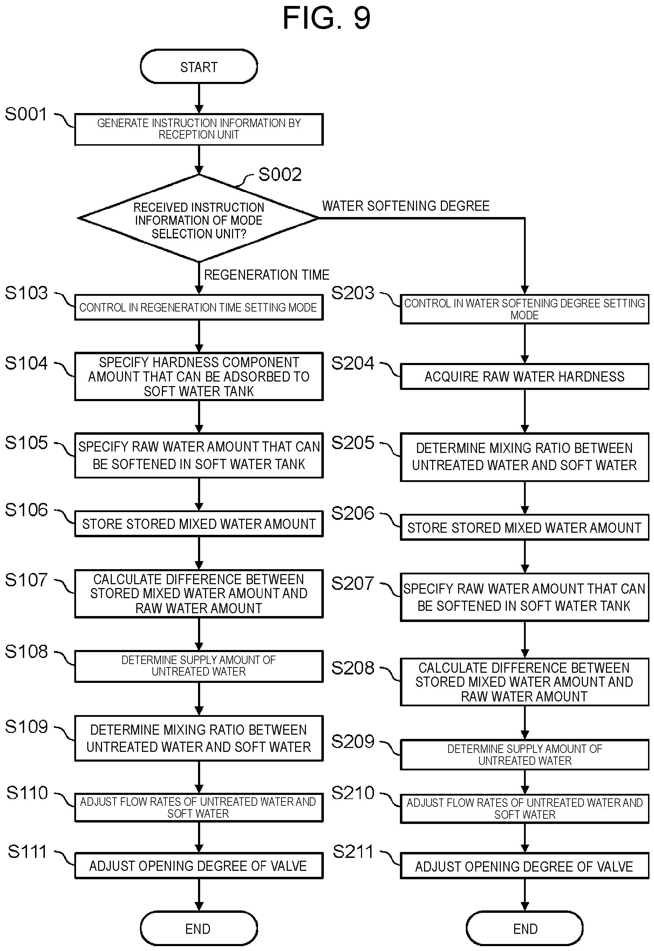

Next, the control executed by controller 15 in the above configuration will be described with reference to Fig. 9. Fig. 9 is a flowchart illustrating the control of the water softener according to the exemplary embodiment. Herein, in the flowchart, numbers with S as an initial letter are assigned. For example, S1 or the like indicates a treatment step. The magnitude of a numerical value indicating the treatment step has no relation to a treatment order.

### (3. Control method of water softener 1)

The control executed in the water softening process in water softener 1 will be described.

First, reception unit 68 receives the input related to the regeneration time or the water softening degree from the user and generates the instruction information (S001). Examples of the instruction information include the regeneration time of the resin and the water softening degree of the water obtained from the water intake port.

Mode selection unit 69 selects one operation mode from among the plurality of operation modes based on the instruction information generated by the reception unit.

In a case where the instruction information is the information regarding the regeneration time, controller 15 performs control in the regeneration time setting mode (S002 → S103).

In a case where the instruction information is the information regarding the water softening degree, the controller 15 performs control in the water softening degree setting mode (S002 → S203).

Hereinafter, first, a series of control (S103 to S111) of the regeneration time setting mode will be described, and then a series of control (S203 to S211) of the water softening degree setting mode will be described.

### (3.1 Regeneration time setting mode)

Hardness component amount specifying unit 60 specifies the hardness component amount that can be adsorbed to the soft water tank in order to complete the resin regeneration within the regeneration time based on the input instruction information regarding the regeneration time (S104).

Soft water amount specifying unit 61 specifies the raw water amount that can be softened by the soft water tank to complete the resin regeneration within the regeneration time based on the instruction information regarding the regeneration time, the hardness component amount specified by hardness component amount specifying unit 60, and the information regarding the raw water hardness (S105).

Flow rate storage 62 stores the stored mixed water amount which is the water amount per unit time of the mixed water sent from mixer 55 (S106).

Calculation unit 63 calculates the difference based on the stored mixed water amount stored in flow rate storage 62 and the raw water amount that is specified by soft water amount specifying unit 61 and can be softened (S107). Specifically, the difference is calculated by subtracting the raw water amount from the stored mixed water amount.

Then, untreated water amount determination unit 64 determines the supply amount of untreated water to mixer 55 from the difference calculated by calculation unit 63 (S108). Specifically, a value obtained by subtracting the raw water amount from the stored mixed water amount is the supply amount of untreated water.

Subsequently, mixing ratio determination unit 58 determines the mixing ratio between the untreated water and the soft water based on the information on the raw water amount specified by soft water amount specifying unit 61 and the supply amount of untreated water determined by untreated water amount determination unit 64 (S109).

Then, flow rate controller 59 controls the flow rates of the untreated water and the soft water by flow rate adjustment unit 56 to have the mixing ratio determined by mixing ratio determination unit 58 (S110).

Flow rate adjustment unit 56 adjusts the opening degree of valve 57 based on the flow rate of the untreated water determined by untreated water amount determination unit 64 (S111).

As described above, the raw water amount that can be softened is specified based on the instruction information (regeneration time) of the user and the information on the raw water hardness, and the information on the mixed water of the untreated water and the soft water is also combined to determine the supply amount of untreated water. As a result, the mixing ratio between the untreated water and the soft water is determined, and the opening degree of valve 57 is adjusted. Accordingly, it is possible to use the soft water adjusted to the water softening degree capable of realizing the resin regeneration in a predetermined time.

Note that, the amount of mixed water sent from mixer 55 may be measured, and in a case where the cumulative amount of mixed water from the start of the water softening process exceeds the total passed water amount from mixer 55 input in advance or in a case where the supply amount of raw water to the soft water tank becomes more than or equal to the raw water amount specified by soft water amount specifying unit 61, electrolytic tank 9 may be activated to start the resin regeneration process.

Note that, in the above example, the instruction information is generated to correspond to the regeneration time set by the user, and water softener 1 is controlled. However, the present disclosure is not limited thereto, and for example, the operation in the regeneration time setting mode may be directly instructed.

### (3.2 Water softening degree setting mode)

Raw water hardness measurement unit 70 acquires actual measurement information of the raw water hardness (S204). Note that, the raw water hardness may not be an actual measurement value measured by raw water hardness measurement unit 70, and an assumed raw water hardness input in advance may be referred to. In that case, the following treatments can be performed without providing raw water hardness measurement unit 70.

Hardness and mixing ratio determination unit 67 determines the mixing ratio between the untreated water which is the raw water in mixer 55 and the soft water after passing through the soft water tank from the information on the water softening degree set by the instruction information of the user and the acquired information on the raw water hardness (S205).

Specifically, assuming that the hardness of the soft water after passing through the soft water tank is 0 ppm, the mixing ratio is determined. As an example of the mixing ratio setting, in a case where the water softening degree of the instruction information is 40 ppm and the raw water hardness is 100 ppm, untreated water : neutralized soft water = 2 : 3 is determined as the mixing ratio.

Flow rate storage 62 stores the stored mixed water amount which is the water amount per unit time of the mixed water sent from mixer 55 (S206).

Soft water amount specifying unit 61 specifies the raw water amount that can be softened by the soft water tank based on the mixing ratio between the untreated water and the neutralized soft water determined by hardness and mixing ratio determination unit 67 and the stored mixed water amount information stored in flow rate storage 62 (S207).

Note that, since the hardness component amount that can be adsorbed to the soft water tank can be specified in hardness component amount specifying unit 60 by specifying the raw water amount, it is possible to derive a time required to complete the regeneration of the resin.

Subsequently, calculation unit 63 calculates the difference based on the stored mixed water amount stored in flow rate storage 62 and the raw water amount specified by soft water amount specifying unit 61 (S208). Specifically, the difference is calculated by subtracting the raw water amount from the stored mixed water amount.

Untreated water amount determination unit 64 determines the supply amount of untreated water from the difference calculated by calculation unit 63 (S209).

Then, flow rate controller 59 controls the flow rates of the untreated water and the soft water by flow rate adjustment unit 56 such that the mixing ratio determined by hardness and mixing ratio determination unit 67 is obtained (S210). Note that, the flow rate refers to the passed water amount per unit time, and is adjusted such that the flow rate ratio matches the determined mixing ratio.

Finally, flow rate adjustment unit 56 adjusts the opening degree of valve 57 based on the flow rate of the untreated water determined by untreated water amount determination unit 64 (S211).

As described above, the mixing ratio between the untreated water as the raw water and the neutralized soft water after passing through the soft water tank is determined based on the instruction information (water softening degree) of the user and the information on the raw water hardness, and the supply amount of untreated water is determined by also combining the raw water amount that can be softened and the information on the mixed water of the untreated water and the soft water. As a result, the opening degree of valve 57 is adjusted to correspond to the predetermined mixing ratio, and thus, soft water having a predetermined water softening degree can be sent from water softener 1.

Note that, although the instruction information is generated to correspond to the water softening degree set by the user and water softener 1 is controlled, the present disclosure is not limited thereto, and for example, the operation in the water softening degree setting mode may be directly instructed.

### (3.3 Feedback control)

In a case where water softener 1 is operated in the regeneration time setting mode or the water softening degree setting mode, feedback control is performed in order to bring an actual water softening degree close to the set water softening degree in a case where a deviation occurs between the set water softening degree and the water softening degree of actually obtained water.

Water quality measurement unit 71 (see Fig. 8) is provided on the downstream side of mixer 55 and on the upstream side of water intake port 7. Water quality measurement unit 71 measures water quality of the mixed water after passing through mixer 55, and obtains first water quality information. Note that, the first water quality information is water quality information of water having passed through mixer 55. Examples of the water quality information include the hardness and the water softening degree. In addition, it is preferable to measure the water quality of the mixed water at a timing shortly after the start of the water softening process after the end of the regeneration process and set the measured water quality as the first water quality information. As a result, water quality information at a timing when hardness component adsorption amounts of the soft water tank and the neutralization tank are small can be set as the first water quality information.

Water quality storage 72 (see Fig. 8) stores stored water quality information that is water quality information of the mixed water. Note that, the stored water quality information is a value input in advance (as an example, a value having a predetermined range), and is water quality information of the mixed water obtained in a case where the untreated water and the soft water are mixed in each operation mode.

Water quality comparison unit 73 (see Fig. 8) compares the first water quality information with the stored water quality information. Then, as a result of the comparison, in a case where the first water quality information is out of a range of the stored water quality information, the supply amount of untreated water or neutralized soft water determined by flow rate controller 59 is controlled such that the first water quality information has a value within the range of the stored water quality information.

As a specific control method, for example, in a case where the water softening degree of the mixed water exceeds a predetermined range, the mixing ratio between the untreated water and the soft water is changed, and a treatment of reducing the supply amount of untreated water or increasing the supply amount of neutralized soft water is performed to lower the water softening degree. In addition, in a case where the water softening degree of the mixed water is lower than the predetermined range, the mixing ratio between the untreated water and the soft water is changed, and a treatment of increasing the supply amount of untreated water or decreasing the supply amount of neutralized soft water is performed to increase the water softening degree.

As a result, even in a case where a deviation occurs between the set water softening degree and the actual water softening degree during the operation of water softener 1, this deviation can be corrected. Accordingly, it is possible to more reliably obtain water having a desired hardness or water softening degree.

Note that, although the feedback control described above is not necessarily performed, it is possible to correct the difference in hardness or water softening degree caused during the operation by performing the feedback control. However, in a case where the feedback control is not performed, since it is not necessary to provide water quality measurement unit 71 and the like, the configuration of water softener 1 can be simplified.

### (3.4 End control of regeneration process)

The end control executed in the regeneration process in water softener 1 will be described.

Time storage 65 stores an elapsed time from the start of the regeneration process.

Time comparison unit 66 compares the elapsed time stored in time storage 65 with the regeneration time based on the instruction information generated by reception unit 68 or the regeneration time obtained from the mixing ratio calculated by mixing ratio determination unit 58.

As a result of the comparison, in a case where the elapsed time is less than or equal to the regeneration time, controller 15 continues the regeneration process. In a case where the elapsed time exceeds the regeneration time, controller 15 performs control to end the regeneration process. As a result, it is possible to prevent the regeneration process from proceeding beyond the regeneration time calculated based on the instruction information. Accordingly, it is possible to end the regeneration process in a time corresponding to a request of the user.

Note that, the end control of the regeneration process using time storage 65 and time comparison unit 66 is not necessarily performed, but is useful because the end control enables the regeneration process to be ended in a time corresponding to the request of the user.

### (4. Effects and the like)

From above, in accordance with water softener 1 according to the exemplary embodiment, the following effects can be obtained.
(1) Water softener 1 includes a soft water tank that softens raw water containing a hardness component by weakly acidic cation exchange resin 33 to generate acidic soft water, a neutralization tank that neutralizes a pH of the acidic soft water having passed through the soft water tank by weakly basic anion exchange resin 34 to generate neutralized soft water, bypass flow path 53 that sends the raw water as untreated water to a downstream side of the neutralization tank without passing the raw water through the soft water tank and the neutralization tank, mixer 55 that mixes the untreated water sent from bypass flow path 53 and the neutralized soft water sent from the neutralization tank to generate mixed water, flow rate adjustment unit 56 that adjusts a supply amount of at least one of the untreated water and the neutralized soft water to mixer 55, and controller 15 that controls a mixing ratio between the untreated water and the neutralized soft water which is to be adjusted by flow rate adjustment unit 56. Controller 15 includes mixing ratio determination unit 58 that determines the mixing ratio between the untreated water and the neutralized soft water based on instruction information regarding at least one of a regeneration time and a water softening degree of the mixed water, the regeneration time being a time during which a regeneration process of regenerating at least one of weakly acidic cation exchange resin 33 and weakly basic anion exchange resin 34 is performed, and flow rate controller 59 that adjusts the supply amount to be adjusted by flow rate adjustment unit 56 to obtain the mixing ratio determined by mixing ratio determination unit 58.
   According to such a configuration, since the water softening degree of the mixed water of the untreated water and the neutralized soft water can be adjusted, the hardness component amount adsorbed to weakly acidic cation exchange resin 33 can be reduced. That is, it is possible to shorten the time required for the regeneration process of operating electrolytic tank 9.
(2) In water softener 1, controller 15 may further include soft water amount specifying unit 61 that specifies a raw water amount which is an amount of the raw water configured to be treated by the soft water tank in order to achieve regeneration of at least one of weakly acidic cation exchange resin 33 and weakly basic anion exchange resin 34 in the regeneration time based on the regeneration time specified from the instruction information and raw water hardness that is hardness of the raw water, flow rate storage 62 that stores a stored mixed water amount that is a water amount of the mixed water per unit time sent from mixer 55, a calculation unit that calculates a difference between a total passed water amount of the mixed water per unit time obtained by mixing the untreated water and the neutralized soft water and the raw water amount specified by the soft water amount specifying unit, and an untreated water amount determination unit that determines the supply amount of the untreated water based on the difference calculated by the calculation unit.
   According to such a configuration, when the user inputs the instruction information of the regeneration time, the mixing ratio and the supply amount of the untreated water and the neutralized soft water that can complete the regeneration process in the predetermined regeneration time can be determined based on the input information. In addition, the water softening degree of the soft water sent from mixer 55 can also be derived.
(3) In water softener 1, mixing ratio determination unit 58 may include hardness and mixing ratio determination unit 67 that determines the mixing ratio between the untreated water and the neutralized soft water based on raw water hardness that is hardness of the raw water to have the water softening degree specified from the instruction information. In addition, controller 15 may further include flow rate storage 62 that stores a stored mixed water amount that is a water amount of the mixed water sent from mixer 55 per unit time, soft water amount specifying unit 61 that specifies a supply amount of the raw water to the soft water tank from the mixing ratio determined by hardness and mixing ratio determination unit 67 and the stored mixed water amount stored in flow rate storage 62, calculation unit 63 that calculates a difference between a total passed water amount of the mixed water obtained by mixing the untreated water and the neutralized soft water per unit time and a supply amount of the raw water specified by soft water amount specifying unit 61, and untreated water amount determination unit 64 that determines the supply amount of the untreated water based on the difference calculated by calculation unit 63.
   According to such a configuration, when the user inputs the instruction information of the water softening degree, the mixing ratio and the supply amount of the untreated water and the neutralized soft water that can be adjusted to the predetermined water softening degree can be known based on the input information. Since the raw water supply amount supplied to the soft water tank is known, the time required to complete the resin regeneration process can be derived.
(4) In water softener 1, controller 15 may further include hardness component amount specifying unit 60 that specifies a hardness component amount to be adsorbed to the soft water tank in order to achieve the regeneration in the regeneration time. In addition, soft water amount specifying unit 61 may be configured to specify the raw water amount to be treated by the soft water tank based on the raw water hardness and the hardness component amount specified by hardness component amount specifying unit 60.
   According to such a configuration, since the hardness component amount adsorbed to the soft water tank can be calculated under the condition in which the resin regeneration in the regeneration time based on the instruction information is achieved, the raw water amount that can be softened when water softener 1 is driven can be derived.
(5) In water softener 1, controller 15 may further include time storage 65 that stores an elapsed time from a start of the regeneration process, and time comparison unit 66 that compares the elapsed time stored in time storage 65 with the regeneration time. In addition, controller 15 may be configured to end the regeneration process in a case where the elapsed time exceeds the regeneration time.
   According to such a configuration, in a case where the predetermined regeneration time is exceeded during the progress of the regeneration process, the regeneration process can be ended. Accordingly, water softener 1 can be prevented from being out of the range of the regeneration time instructed by the user, and the convenience of the water softener 1 can be enhanced. In addition, it is possible to reduce an unexpected load on electrolytic tank 9 due to the extension of the regeneration time from the predetermined time.
(6) Water softener 1 may further include electrolytic tank 9 that is used in the regeneration process, and generates acidic electrolytic water to be used for the regeneration of weakly acidic cation exchange resin 33 and alkaline electrolytic water to be used for the regeneration of weakly basic anion exchange resin 34. In addition, controller 15 may be configured to activate electrolytic tank 9 and start the regeneration process in a case where the water amount of the mixed water sent from mixer 55 is more than or equal to the total passed water amount or in a case where a supply amount of the raw water to the soft water tank is more than or equal to the raw water amount specified by soft water amount specifying unit 61.
   According to such a configuration, it is possible to further prevent deterioration of the water softening degree that may occur in a case where the total passed water amount of the mixed water exceeds a predetermined passed water amount. Accordingly, it is possible to suppress a possibility that the user uses water that has not been softened.
(7) In water softener 1, flow rate adjustment unit 56 may include valve 57 configured to variably set an opening degree, and may be configured to change the opening degree of valve 57 based on the supply amount of the untreated water determined by untreated water amount determination unit 64.
   According to such a configuration, it is possible to supply the untreated water and the neutralized soft water in accordance with the specified mixing ratio between the untreated water and the neutralized soft water. As a result, the water softening degree of the mixed water can be adjusted to a predetermined value.
(8) Water softener 1 may further include reception unit 68 that receives an input related to the regeneration time or the water softening degree from a user and generates the instruction information and mode selection unit 69 that selects one operation mode from among a plurality of operation modes based on the instruction information generated by reception unit 68. In addition, mixing ratio determination unit 58 may be configured to determine the mixing ratio between the untreated water and the neutralized soft water to obtain the mixing ratio corresponding to the operation mode selected by mode selection unit 69.
   According to such a configuration, the user can further select the operation mode assumed by the user based on the information input in advance, and water softener 1 can be operated according to the request of the user.
(9) Water softener 1 may further includes water quality measurement unit 71 that measures water quality of the mixed water and obtains first water quality information. In addition, controller 15 may further include water quality storage 72 that stores water quality information of the mixed water corresponding to the instruction information, and water quality comparison unit 73 that compares the first water quality information with stored water quality information having a predetermined range stored in water quality storage 72. In addition, untreated water amount determination unit 64 may be configured to change the supply amount of at least one of the untreated water and the neutralized soft water so that the first water quality information falls within a range of the stored water quality information in a case where the first water quality information falls out of the range of the stored water quality information.
   According to such a configuration, the water quality of the mixed water when the water softening process of water softener 1 is used can be further monitored, and the difference between the predetermined water softening degree input in the operation mode setting or the like and the actual measured water softening degree can be grasped in real time. Thus, it is possible to perform feedback control to adjust the water softening degree to a predetermined degree as needed based on the water quality information.
(10) In water softener 1, water quality storage 72 may be configured to store the water quality information after completion of the regeneration process as the stored water quality information.
   According to such a configuration, it is possible to further specify a reference value of water quality required during the feedback control.
(11) In water softener 1, the water softening degree may be a water softening degree of the mixed water sent from mixer 55. As a result, it is possible to specify the water softening degree of the water obtained from the water intake port. Accordingly, the user can use mixed water having a desired water softening degree.
(12) A method for controlling a water softener 1 is a method for controlling a water softener 1 including a soft water tank that softens raw water containing a hardness component by weakly acidic cation exchange resin 33 to generate acidic soft water, a neutralization tank that neutralizes a pH of the acidic soft water having passed through the soft water tank by weakly basic anion exchange resin 34 to generate neutralized soft water, bypass flow path 53 that sends the raw water as untreated water to a downstream side of the neutralization tank without passing the raw water through the soft water tank and the neutralization tank, mixer 55 that mixes the untreated water sent from bypass flow path 53 and the neutralized soft water sent from the neutralization tank to generate mixed water, and flow rate adjustment unit 56 that adjusts a supply amount of at least one of the untreated water and the neutralized soft water to mixer 55. This control method includes determining a mixing ratio between the untreated water and the neutralized soft water based on instruction information regarding at least one of a regeneration time and a water softening degree of the mixed water, the regeneration time being a time during which a regeneration process of regenerating at least one of weakly acidic cation exchange resin 33 and weakly basic anion exchange resin 34 is performed, and adjusting the supply amount to be adjusted by flow rate adjustment unit 56 to obtain the mixing ratio.

According to such a method, since the water softening degree of the mixed water of the untreated water and the neutralized soft water can be adjusted, the hardness component amount adsorbed to weakly acidic cation exchange resin 33 can be reduced. That is, it is possible to shorten the time required for the regeneration process of operating electrolytic tank 9.

From above, the present disclosure has been described based on the exemplary embodiments. It is understood by those skilled in the art that these exemplary embodiments are merely examples, that the components or the treatment treatments of those can be combined as various modifications, and that such modifications also fall within the scope of the present disclosure.

### INDUSTRIAL APPLICABILITY

The water softener and the method for controlling a water softener according to the present disclosure can be applied to a point-of-use (POU) water purification apparatus, a point-of-entry (POE) water purification apparatus, and the like, and are useful.

### REFERENCE MARKS IN THE DRAWINGS

1: water softener
2: inlet port
3: first soft water tank
4: first neutralization tank
5: second soft water tank
6: second neutralization tank
7: water intake port
8: regeneration device
9: electrolytic tank
10: capture unit
11: first water pump
12: second water pump
13: drainage port
14: capture unit drainage port
15: controller
18, 19, 20, 21, 22, 23: opening and closing valve
24, 25, 26, 27: flow path switching valve
28, 29, 30, 31, 32, 74: flow path
33: weakly acidic cation exchange resin
34: weakly basic anion exchange resin
35: first supply flow path
36: second supply flow path
37: first collection flow path
38: second collection flow path
39: soft water tank regeneration circulation flow path
40: neutralization tank regeneration circulation flow path
41: electrodes
41a: electrode
41b: electrode
42: neutralization tank bypass flow path
43: water softening flow path
44: soft water tank bypass flow path
45: regeneration flow path washing flow path
46: first drainage flow path
47: second drainage flow path
49: electrolytic tank washing flow path
50: third drainage flow path
51: capture unit washing flow path
52: fourth drainage flow path
53: bypass flow path
54: drainage flow path
55: mixer
56: flow rate adjustment unit
57: valve
58: mixing ratio determination unit
59: flow rate controller
60: hardness component amount specifying unit
61: soft water amount specifying unit
62: flow rate storage
63: calculation unit
64: untreated water amount determination unit
65: time storage
66: time comparison unit
67: hardness and mixing ratio determination unit
68: reception unit
69: mode selection unit
70: raw water hardness measurement unit
71: water quality measurement unit
72: water quality storage
73: water quality comparison unit
75: display
76: input unit

## Claims

1. A water softener comprising:
a soft water tank that softens raw water containing a hardness component by a weakly acidic cation exchange resin to generate acidic soft water;
a neutralization tank that neutralizes a pH of the acidic soft water having passed through the soft water tank by a weakly basic anion exchange resin to generate neutralized soft water;
a bypass flow path that sends the raw water as untreated water to a downstream side of the neutralization tank without passing the raw water through the soft water tank and the neutralization tank;
a mixer that mixes the untreated water sent from the bypass flow path and the neutralized soft water sent from the neutralization tank to generate mixed water;
a flow rate adjustment unit that adjusts a supply amount of at least one of the untreated water and the neutralized soft water to the mixer; and
a controller that controls a mixing ratio between the untreated water and the neutralized soft water which is to be adjusted by the flow rate adjustment unit,
wherein the controller includes:
a mixing ratio determination unit that determines the mixing ratio between the untreated water and the neutralized soft water based on instruction information regarding at least one of a regeneration time and a water softening degree of the mixed water, the regeneration time being a time during which a regeneration process of regenerating at least one of the weakly acidic cation exchange resin and the weakly basic anion exchange resin is performed; and
a flow rate controller that adjusts the supply amount to be adjusted by the flow rate adjustment unit to obtain the mixing ratio determined by the mixing ratio determination unit.

2. The water softener according to Claim 1,
wherein the controller further includes:
a soft water amount specifying unit that specifies a raw water amount which is an amount of the raw water configured to be treated by the soft water tank in order to achieve regeneration of at least one of the weakly acidic cation exchange resin and the weakly basic anion exchange resin in the regeneration time based on the regeneration time specified from the instruction information and raw water hardness that is hardness of the raw water;
a flow rate storage that stores a stored mixed water amount that is a water amount of the mixed water per unit time sent from the mixer;
a calculation unit that calculates a difference between a total passed water amount of the mixed water per unit time obtained by mixing the untreated water and the neutralized soft water and the raw water amount specified by the soft water amount specifying unit; and
an untreated water amount determination unit that determines the supply amount of the untreated water based on the difference calculated by the calculation unit.

3. The water softener according to Claim 1,
wherein the mixing ratio determination unit includes a hardness and mixing ratio determination unit that determines the mixing ratio between the untreated water and the neutralized soft water based on raw water hardness that is hardness of the raw water to have the water softening degree specified from the instruction information,
the controller further includes:
a flow rate storage that stores a stored mixed water amount that is a water amount of the mixed water sent from the mixer per unit time;
a soft water amount specifying unit that specifies a supply amount of the raw water to the soft water tank from the mixing ratio determined by the hardness and mixing ratio determination unit and the stored mixed water amount stored in the flow rate storage;
a calculation unit that calculates a difference between a total passed water amount of the mixed water per unit time obtained by mixing the untreated water and the neutralized soft water and a supply amount of the raw water specified by the soft water amount specifying unit; and
an untreated water amount determination unit that determines the supply amount of the untreated water based on the difference calculated by the calculation unit.

4. The water softener according to Claim 2,
wherein the controller further includes a hardness component amount specifying unit that specifies a hardness component amount to be adsorbed to the soft water tank in order to achieve the regeneration in the regeneration time, and
the soft water amount specifying unit is configured to specify the raw water amount to be treated by the soft water tank based on the raw water hardness and the hardness component amount specified by the hardness component amount specifying unit.

5. The water softener according to Claim 2 or 4,
wherein the controller further includes:
a time storage that stores an elapsed time from a start of the regeneration process; and
a time comparison unit that compares the elapsed time stored in the time storage with the regeneration time, and
the controller is configured to end the regeneration process in a case where the elapsed time exceeds the regeneration time.

6. The water softener according to Claim 2 or 3, further comprising an electrolytic tank that is used in the regeneration process, and generates acidic electrolytic water to be used for the regeneration of the weakly acidic cation exchange resin and alkaline electrolytic water to be used for the regeneration of the weakly basic anion exchange resin,
wherein the controller is configured to activate the electrolytic tank and start the regeneration process in a case where the water amount of the mixed water sent from the mixer is more than or equal to the total passed water amount or in a case where a supply amount of the raw water to the soft water tank is more than or equal to the raw water amount specified by the soft water amount specifying unit.

7. The water softener according to Claim 2 or 3,
wherein the flow rate adjustment unit includes a valve configured to variably set an opening degree, and is configured to change the opening degree of the valve based on the supply amount of the untreated water determined by the untreated water amount determination unit.

8. The water softener according to Claim 1, further comprising:
a reception unit that receives an input related to the regeneration time or the water softening degree from a user and generates the instruction information; and
a mode selection unit that selects one operation mode from among a plurality of operation modes based on the instruction information generated by the reception unit,
wherein the mixing ratio determination unit is configured to determine the mixing ratio between the untreated water and the neutralized soft water to obtain the mixing ratio corresponding to the operation mode selected by the mode selection unit.

9. The water softener according to Claim 2 or 3, further comprising a water quality measurement unit that measures water quality of the mixed water and obtains first water quality information,
wherein the controller further includes:
a water quality storage that stores water quality information of the mixed water corresponding to the instruction information; and
a water quality comparison unit that compares the first water quality information with stored water quality information having a predetermined range stored in the water quality storage, and
the untreated water amount determination unit is configured to change the supply amount of the untreated water so that the first water quality information falls within a range of the stored water quality information in a case where the first water quality information falls out of the range of the stored water quality information.

10. The water softener according to Claim 9, wherein the water quality storage is configured to store the water quality information after completion of the regeneration process as the stored water quality information.

11. The water softener according to claim 2 or 3, wherein the water softening degree is a water softening degree of the mixed water sent from the mixer.

12. A method for controlling a water softener, the water softener including a soft water tank that softens raw water containing a hardness component by a weakly acidic cation exchange resin to generate acidic soft water, a neutralization tank that neutralizes a pH of the acidic soft water having passed through the soft water tank by a weakly basic anion exchange resin to generate neutralized soft water, a bypass flow path that sends the raw water as untreated water to a downstream side of the neutralization tank without passing the raw water through the soft water tank and the neutralization tank, a mixer that mixes the untreated water sent from the bypass flow path and the neutralized soft water sent from the neutralization tank to generate mixed water, and a flow rate adjustment unit that adjusts a supply amount of at least one of the untreated water and the neutralized soft water to the mixer, the method comprising:
determining a mixing ratio between the untreated water and the neutralized soft water based on instruction information regarding at least one of a regeneration time and a water softening degree of the mixed water, the regeneration time being a time during which a regeneration process of regenerating at least one of the weakly acidic cation exchange resin and the weakly basic anion exchange resin is performed; and
adjusting the supply amount to be adjusted by the flow rate adjustment unit to obtain the mixing ratio.
